# EUROPEAN PATENT SPECIFICATION

(11) **EP 4 478 646 B1**
(45) Date of publication and mention of the grant of the patent: **20.05.2026**
(21) Application number: 23762849.0
(22) Date of filing: 27.02.2023
(51) Int. Cl.: H04W 72/56, H04W 74/0808, H04W 76/15, H04W 76/50, H04W 84/12, H04L 5/00, H04W 74/00, H04W 74/08, H04W 74/0816

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(30) Priority: 01.03.2022 CN 202210200091
(43) Date of publication of application: 18.12.2024
(73) Proprietor: Huawei Technologies Co., Ltd., Shenzhen, Guangdong 518129 (CN)
(72) Inventor: GUO, Yuchen, Shenzhen, Guangdong 518129 (CN); LI, Yunbo, Shenzhen, Guangdong 518129 (CN); GAN, Ming, Shenzhen, Guangdong 518129 (CN)
(74) Representative: Gill Jennings & Every LLP
(86) International application number: PCT/CN2023/078526
(87) International publication number: WO 2023/165450

(56) References cited:
- CN-A- 101 364 925
- US-A1- 2019 223 219
- US-A1- 2021 144 778
- YONGGANG FANG (MEDIATEK): "cc36-CR-for-cids-related-to-35-11-3", vol. 802.11 EHT; 802.11be, no. 4, 28 February 2022 (2022-02-28), pages 1 - 12, XP068189173, Retrieved from the Internet <URL:https://mentor.ieee.org/802.11/dcn/21/11-21-1317-04-00be-cc36-cr-for-cids-related-to-35-11-3.docx> [retrieved on 20220228]
- AHN WOOJIN: "Novel Multi-AP Coordinated Transmission Scheme for 7th Generation WLAN 802.11be", ENTROPY, vol. 22, no. 12, pages 1426, XP093088235, DOI: 10.3390/e22121426

## Description

### TECHNICAL FIELD

This application relates to the communication field, and in particular, to communication methods and communication apparatus.

### BACKGROUND

An emergency preparedness communications service (emergency preparedness communications service, EPCS) is a service that has an extremely high requirement on a communication delay, for example, a communication service in a crisis scenario such as fire and earthquake. For the EPCS, the wireless local area network standard 802.11be defines a priority access mechanism, so that an EPCS station can access a channel as soon as possible, to ensure priority transmission of an emergency service. The EPCS station is a station that needs to perform the EPCS. Therefore, a solution that enables the EPCS station to access the channel as soon as possible in various scenarios needs to be researched.

YONGGANG FANG (MEDIATEK): "cc36-CR-for-cids-related-to-35-11-3", IEEE DRAFT; 11-21-1317-04-00BE-CC36-CR-FOR-CIDS-RELATEDTO-35-11-3, IEEE-SA MENTOR, PISCATAWAY, NJ USA, vol. 802.11 EHT; 802.11be, no. 4 28 February 2022 (2022-02-28), pages 1-12 and US 2021/144778 A1 are relevant background art.

### SUMMARY

Embodiments of this application disclose communication methods and communication apparatus.
The invention is defined in the appended claims.

According to a first aspect, an embodiment of this application provides a communication method. The method includes: sending a request frame to an access point, where the request frame is used to request to obtain a channel priority access right, the request frame carries a first parameter set, and the first parameter set includes multi-user MU enhanced distributed channel access EDCA parameters that a first station intends to use to perform channel contention; and receiving a response frame for the request frame. In the first aspect and a possible implementation of the first aspect, an execution body is the first station.

In this embodiment of this application, the first parameter set includes the MU EDCA parameters that the first station intends to use to perform channel contention. The request frame carrying the first parameter set is sent. In this way, channel contention is performed by using parameters with a higher channel access priority.

In a possible implementation, the method further includes: after a data frame triggered based on a trigger frame of the access point, performing channel contention by using the parameters in the first parameter set.

In this implementation, after the data frame triggered based on the trigger frame of the access point is sent, channel contention is performed by using the parameters in the first parameter set. Compared with a common station, the first station has a higher channel access priority.

In a possible implementation, the performing channel contention by using the parameters in the first parameter set includes: performing channel contention within first duration by using the parameters in the first parameter set. The first duration is obtained based on a parameter in the first parameter set.

In this implementation, channel contention is performed within the first duration by using the parameters in the first parameter set. This complies with an MU EDCA mechanism. In this way, relative fairness can be maintained for the first station and a legacy station (a station that does not meet the 802.11ax standard).

The communication method in the first aspect may be replaced by the following: The first station sends a request frame to the access point. The request frame carries a second parameter set. The second parameter set includes MU EDCA parameters that a second station intends to use to perform channel contention. The second station and the first station belong to a same multi-link station device. The first station receives a response frame of the access point for the request frame. The response frame carries a fourth parameter set. The fourth parameter set includes MU EDCA parameters that the access point allows the second station to use to perform channel contention. The fourth parameter set is the same as or different from the second parameter set.

In this embodiment of this application, the second parameter set includes the MU EDCA parameters that the second station intends to use to perform channel contention. The request frame carrying the second parameter set is sent. In this way, channel contention is performed by using parameters with a higher channel access priority.

According to a second aspect, an embodiment of this application provides a communication method. The method includes: sending a request frame to an access point, where the request frame is used to request to obtain a channel priority access right; and receiving a response frame for the request frame, where the response frame carries a third parameter set, and the third parameter set includes MU EDCA parameters that are to be used by a first station to perform channel contention. In other words, the third parameter set includes the MU EDCA parameters that the access point allows the first station to use to perform channel contention. In the second aspect and a possible implementation of the second aspect, an execution entity is a first station.

In this embodiment of this application, the response frame carries the third parameter set, and the first station can obtain, through receiving the response frame, the MU EDCA parameters that are to be used by the first station to perform channel contention.

In a possible implementation, the method further includes: after a data frame triggered based on a trigger frame of the access point, performing channel contention by using the parameters in the third parameter set.

In this implementation, after the data frame triggered based on the trigger frame of the access point is sent, channel contention is performed by using the parameters in the third parameter set. Compared with a common station, the first station has a higher channel access priority.

In a possible implementation, the performing channel contention by using the parameters in the third parameter set includes: performing channel contention within third duration by using the parameters in the third parameter set. The third duration is obtained based on a parameter in the third parameter set.

In this implementation, channel contention is performed within the third duration by using the parameters in the third parameter set. This complies with an MU EDCA mechanism. In this way, relative fairness can be maintained for the first station and a legacy station (a station that does not meet the 802.11ax standard).

According to a third aspect, an embodiment of this application provides another communication method. The method includes: sending a request frame to an access point, where the request frame is used to request to obtain a channel priority access right; receiving a response frame for the request frame; and determining, based on the response frame and an EDCA parameter set carried in a beacon frame, an MU EDCA parameter set that is to be used by a first station. In the third aspect and a possible implementation of the third aspect, an execution entity is the first station.

In this embodiment of this application, the MU EDCA parameter set that is to be used by the first station is determined based on the response frame and the EDCA parameter set carried in the beacon frame, to obtain an MU EDCA parameter set with a higher channel access priority.

In a possible implementation, the MU EDCA parameter set that is to be used by the first station is used to perform channel contention after a data frame triggered based on a trigger frame of the access point is successfully sent.

In this implementation, the MU EDCA parameter set that is to be used by the first station is used to perform channel contention after the data frame triggered based on the trigger frame of the access point is successfully sent, to ensure that the first station has a higher channel access priority.

In a possible implementation, the determining an MU EDCA parameter set that is to be used by a first station further includes: determining, based on an MU EDCA parameter set in the beacon frame, the MU EDCA parameter set that is to be used by the first station.

In this implementation, the following problem can be resolved: The MU EDCA parameter set with the higher channel access priority cannot be accurately and quickly determined based on only the EDCA parameter set carried in the beacon frame.

In a possible implementation, the determining, based on an MU EDCA parameter set in the beacon frame, the MU EDCA parameter set that is to be used by the first station includes: determining, based on an MU EDCA timer in the MU EDCA parameter set, the MU EDCA parameter set that is to be used by the first station.

In this implementation, the MU EDCA parameter set with the higher channel access priority can be accurately and quickly determined.

In a possible implementation, the MU EDCA parameter set that is to be used by the first station is used to perform channel contention within second duration after the data frame triggered based on the trigger frame of the access point is successfully sent. The second duration is obtained based on a parameter in the MU EDCA parameter set.

In a possible implementation, the request frame is an EPCS priority access enable request frame, and the response frame is an EPCS priority access enable response frame.

In this implementation, the request frame is an emergency preparedness communications service EPCS priority access enable request frame, and the response frame is an EPCS priority access enable response frame. Because both the request frame and the response frame are existing frames, no additional signaling needs to be sent for receiving and sending of the request frame and the response frame.

According to a fourth aspect, an embodiment of this application provides another communication method. The method includes: receiving a request frame from a first station, where the request frame is used to request to obtain a channel priority access right, the request frame carries a first parameter set, and the first parameter set includes MU EDCA parameters that the first station intends to use to perform channel contention; and sending a response frame for the request frame to the first station. In the fourth aspect and a possible implementation of the fourth aspect, an execution body is an access point.

In this embodiment of this application, the first parameter set includes the MU EDCA parameters that the first station intends to use to perform channel contention. The request frame carrying the first parameter set may be received to obtain the MU EDCA parameters that the first station intends to use to perform channel contention.

In a possible implementation of the first aspect or the fourth aspect, the first parameter set is included in a link information field in a multi-link element MLE in the request frame, or the first parameter set is included in an MU EDCA parameter set field in the request frame.

In this implementation, the first parameter set is included in the link information field in the multi-link element MLE in the request frame, to independently indicate an MU EDCA parameter set that the first station intends to use to perform channel contention. The first parameter set is included in the MU EDCA parameter set field in the request frame, so that the access point quickly obtains the first parameter set from the MU EDCA parameter set field in the request frame.

In a possible implementation of the first aspect or the fourth aspect, the request frame further carries a second parameter set. The second parameter set includes MU EDCA parameters that a second station intends to use to perform channel contention. The second station and the first station belong to a same multi-link station device.

In this implementation, the request frame further carries the second parameter set. The second station may notify the access point of the second parameter set that the second station intends to use, without sending the request frame, thereby reducing signaling overheads.

In a possible implementation of the first aspect or the fourth aspect, the second parameter set is included in a link information field in the MLE in the request frame.

In this implementation, the second parameter set is included in the link information field in the MLE in the request frame, to independently indicate the MU EDCA parameters that the second station intends to use to perform channel contention.

In a possible implementation of the first aspect or the fourth aspect, the response frame carries a third parameter set. The third parameter set includes MU EDCA parameters that are to be used by the first station to perform channel contention. The third parameter set is different from the first parameter set.

In this implementation, the response frame carries the third parameter set, so that the first station performs channel contention by using the parameters in the third parameter set, to ensure a channel access priority.

In a possible implementation of the first aspect or the fourth aspect, the third parameter set is a subset of the first parameter set.

In this implementation, the third parameter set is a subset of the first parameter set. The first parameter set is determined by the first station from a perspective of the first station. The access point and another station are not considered. The third parameter set is determined by the access point from an overall perspective. A plurality of stations are comprehensively considered. The first station performs channel contention by using the parameters in the third parameter set, to ensure a channel access priority and reduce impact on another station.

In a possible implementation of the first aspect or the fourth aspect, the first parameter set is a subset of the third parameter set.

In this implementation, the first parameter set is a subset of the third parameter set. In comparison with a case in which the first station performs channel contention by using the parameters in the first parameter set, the first station has a higher channel access priority when performing channel contention by using the parameters in the third parameter set.

In a possible implementation of the first aspect or the fourth aspect, the response frame carries a third parameter set. The third parameter set includes MU EDCA parameters that are to be used by the first station to perform channel contention. The third parameter set is the same as the first parameter set.

In this implementation, the response frame carries the third parameter set, so that the first station performs channel contention by using the parameters in the third parameter set, to ensure a channel access priority.

In a possible implementation of the first aspect or the fourth aspect, the third parameter set is included in a link information field in an MLE in the response frame, or the third parameter set is included in an MU EDCA parameter set field in the response frame.

In this implementation, the third parameter set is included in the link information field in the MLE in the response frame, to independently indicate the MU EDCA parameters that are to be used by the first station to perform channel contention. The third parameter set is included in the MU EDCA parameter set field in the response frame, so that the first station quickly obtains the third parameter set from the MU EDCA parameter set field in the response frame.

In a possible implementation of the first aspect or the fourth aspect, the response frame further carries a fourth parameter set. The fourth parameter set includes MU EDCA parameters that are to be used by a second station to perform channel contention. The second station and the first station belong to a same multi-link station device.

In this implementation, the response frame further carries the fourth parameter set. The access point does not need to separately send the response frame to the second station, to reduce signaling overheads.

In a possible implementation of the first aspect or the fourth aspect, the fourth parameter set is a subset of the second parameter set.

In this implementation, the fourth parameter set is a subset of the second parameter set. The second parameter set is determined by the second station from a perspective of the second station. The access point and another station are not considered. The fourth parameter set is determined by the access point from an overall perspective. A plurality of stations are comprehensively considered. The second station performs channel contention by using the parameters in the fourth parameter set, to ensure a channel access priority and reduce impact on another station.

In a possible implementation of the first aspect or the fourth aspect, the second parameter set is a subset of the fourth parameter set.

In this implementation, the second parameter set is a subset of the fourth parameter set. In comparison with a case in which the second station performs channel contention by using the parameters in the second parameter set, the second station has a higher channel access priority when performing channel contention by using the parameters in the fourth parameter set.

In a possible implementation of the first aspect or the fourth aspect, the response frame carries a fourth parameter set. The fourth parameter set includes MU EDCA parameters that are to be used by the second station to perform channel contention. The fourth parameter set is the same as the second parameter set.

In this implementation, the response frame carries the fourth parameter set, so that the second station performs channel contention by using the parameters in the fourth parameter set, to ensure a channel access priority.

In a possible implementation of the first aspect or the fourth aspect, the fourth parameter set is included in a link information field in the MLE in the response frame.

In this implementation, the fourth parameter set is included in the link information field in the MLE in the response frame, to independently indicate the MU EDCA parameters that are to be used by the second station to perform channel contention.

In a possible implementation of the first aspect or the fourth aspect, the request frame is an emergency preparedness communications service EPCS priority access enable request frame, and the response frame is an EPCS priority access enable response frame.

In this implementation, the request frame is an emergency preparedness communications service EPCS priority access enable request frame, and the response frame is an EPCS priority access enable response frame. Because both the request frame and the response frame are existing frames, no additional signaling needs to be sent for receiving and sending of the request frame and the response frame.

In a possible implementation of the first aspect or the fourth aspect, a channel access priority of the first parameter set is higher than a channel access priority of an MU EDCA parameter set that is to be used by a common station. The first station is an EPCS station. The common station is a non-EPCS station. In other words, the common station does not belong to an EPCS station.

The communication method in the fourth aspect may be replaced by the following: The access point receives a request frame from the first station. The request frame carries a second parameter set. The second parameter set includes MU EDCA parameters that a second station intends to use to perform channel contention. The second station and the first station belong to a same multi-link station device. The access point sends a response frame for the request frame to the first station. The response frame carries a fourth parameter set. The fourth parameter set includes MU EDCA parameters that the access point allows the second station to use to perform channel contention. The fourth parameter set is the same as or different from the second parameter set.

In this embodiment of this application, the fourth parameter set includes the MU EDCA parameters that the access point allows the second station to use to perform channel contention, so that the second station performs channel contention by using the parameters with a higher channel access priority.

According to a fifth aspect, an embodiment of this application provides another communication method. The method includes: receiving a request frame from a first station, where the request frame is used to request to obtain a channel priority access right; and sending a response frame for the request frame to the first station, where the response frame carries a third parameter set, and the third parameter set includes MU EDCA parameters that are to be used by the first station to perform channel contention. In other words, the third parameter set includes the MU EDCA parameters that an access point allows the first station to use to perform channel contention. In the fifth aspect and a possible implementation of the fifth aspect, an execution body is the access point.

In this embodiment of this application, the third parameter set includes the MU EDCA parameters that are to be used by the first station to perform channel contention. The response frame carrying the third parameter set is sent to the first station, so that the first station performs channel contention by using the third parameter set to obtain a higher channel access priority.

In a possible implementation of the second aspect or the fifth aspect, the third parameter set is included in a link information field in an MLE in the response frame, or the third parameter set is included in an MU EDCA parameter set field in the response frame.

In this implementation, the third parameter set is included in the link information field in the MLE in the response frame, to independently indicate the MU EDCA parameters that are to be used by the first station to perform channel contention. The third parameter set is included in the MU EDCA parameter set field in the response frame, so that the first station quickly obtains the third parameter set from the MU EDCA parameter set field in the response frame.

In a possible implementation of the second aspect or the fifth aspect, the response frame further carries a fourth parameter set. The fourth parameter set includes MU EDCA parameters that are to be used by a second station to perform channel contention. The second station and the first station belong to a same multi-link station device.

In this implementation, the response frame further carries the fourth parameter set. The access point does not need to separately send the response frame to the second station, to reduce signaling overheads.

In a possible implementation of the second aspect or the fifth aspect, the fourth parameter set is included in a link information field in the MLE in the response frame.

In this implementation, the fourth parameter set is included in the link information field in the MLE in the response frame, to independently indicate the MU EDCA parameters that are to be used by the second station to perform channel contention.

In a possible implementation of the second aspect or the fifth aspect, the request frame is an emergency preparedness communications service EPCS priority access enable request frame, and the response frame is an EPCS priority access enable response frame.

In this implementation, the request frame is an emergency preparedness communications service EPCS priority access enable request frame, and the response frame is an EPCS priority access enable response frame. Because both the request frame and the response frame are existing frames, no additional signaling needs to be sent for receiving and sending of the request frame and the response frame.

In a possible implementation of the second aspect or the fifth aspect, a channel access priority of the third parameter set is higher than a channel access priority of an MU EDCA parameter set used by a common station. The first station is an EPCS station.

According to a sixth aspect, an embodiment of this application provides a communication apparatus, configured to perform the method in the first aspect, the second aspect, the third aspect, or any possible implementation thereof. The communication apparatus includes corresponding units, configured to perform the method in the first aspect, the second aspect, the third aspect, or any possible implementation thereof.

For example, the communication apparatus may include a transceiver unit and a processing unit. The communication apparatus may include the first station in the first aspect, the second aspect, or the third aspect, for example, a non-AP MLD, a STA, or a chip in a non-AP MLD such as a Wi-Fi chip.

According to a seventh aspect, an embodiment of this application provides a communication apparatus, configured to perform the method in the fourth aspect, the fifth aspect, or any possible implementation thereof. The communication apparatus includes corresponding units, configured to perform the method in the fourth aspect, the fifth aspect, or any possible implementation thereof.

For example, the communication apparatus may include a transceiver unit and a processing unit. The communication apparatus includes the access point in the fourth aspect or the fifth aspect, for example, an AP MLD, an AP, or a chip in an AP MLD such as a Wi-Fi chip.

According to an eighth aspect, an embodiment of this application provides a communication apparatus. The communication apparatus includes a processor, configured to perform the method in the first aspect, the second aspect, the third aspect, or any possible implementation thereof.

In a process of performing the foregoing method, a process of sending information and a process of receiving information in the foregoing method may be understood as a process of outputting the information by the processor and a process of receiving the input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the input information, the transceiver receives the information, and inputs the information to the processor. Further, after the transceiver receives the information, other processing may need to be performed on the information before the information is input to the processor.

Based on the foregoing principle, for example, sending the request frame mentioned in the foregoing method may be understood as outputting the request frame by the processor. For another example, receiving the response frame may be understood as receiving the input response frame by the processor.

Operations such as transmitting, sending, and receiving related to the processor may be more generally understood as operations such as outputting, receiving, and inputting of the processor unless otherwise specified or if the operations do not conflict with actual functions or internal logic of the operations in related descriptions.

In an implementation process, the processor may be a processor dedicated to perform these methods, or a processor, for example, a general-purpose processor, that executes computer instructions in a memory to perform these methods. The memory may be a non-transitory (non-transitory) memory, for example, a read-only memory (read only memory, ROM). The memory and the processor may be integrated on a same chip, or may be respectively disposed on different chips. A type of the memory and a manner of disposing the memory and the processor are not limited in this embodiment of this application.

In a possible implementation, the memory is located outside the communication apparatus.

In a possible implementation, the memory is located inside the communication apparatus.

In this embodiment of this application, the processor and the memory may be alternatively integrated into one component. In other words, the processor and the memory may be alternatively integrated together.

In a possible implementation, the communication apparatus further includes a transceiver. The transceiver is configured to receive a signal and/or send a signal. For example, the transceiver may be configured to send a request frame. For another example, the transceiver may be further configured to receive a response frame and the like.

In this embodiment of this application, the communication apparatus may be the first station in the first aspect, the second aspect, or the third aspect. For example, the first station may be a non-AP MLD or a STA.

According to a ninth aspect, an embodiment of this application provides a communication apparatus. The communication apparatus includes a processor, configured to execute a program stored in a memory. When the program is executed, the communication apparatus is enabled to perform the method in the fourth aspect, the fifth aspect, or any possible implementation thereof.

In a possible implementation, the memory is located outside the communication apparatus.

In a possible implementation, the memory is located inside the communication apparatus.

In this embodiment of this application, the processor and the memory may be alternatively integrated into one component. In other words, the processor and the memory may be alternatively integrated together.

In a possible implementation, the communication apparatus further includes a transceiver. The transceiver is configured to receive a signal and/or send a signal. For example, the transceiver may be configured to receive a request frame. For another example, the transceiver may be further configured to send a response frame and the like.

In this embodiment of this application, the communication apparatus may be the access point in the fourth aspect or the fifth aspect. For example, the access point may be an AP MLD or an AP.

According to a tenth aspect, an embodiment of this application provides a communication apparatus. The communication apparatus includes a processing circuit and an interface circuit. The interface circuit is configured to obtain data or output data. The processing circuit is configured to perform the corresponding method in the first aspect or any possible implementation of the first aspect, or the processing circuit is configured to perform the corresponding method in the second aspect or any possible implementation of the second aspect, or the processing circuit is configured to perform the corresponding method in the third aspect or any possible implementation of the third aspect.

According to an eleventh aspect, an embodiment of this application provides a communication apparatus. The communication apparatus includes a processing circuit and an interface circuit. The interface circuit is configured to obtain data or output data. The processing circuit is configured to perform the corresponding method in the fourth aspect or any possible implementation of the fourth aspect, or the processing circuit is configured to perform the corresponding method in the fifth aspect or any possible implementation of the fifth aspect.

According to a twelfth aspect, an embodiment of this application provides a computer-readable storage medium. The computer-readable storage medium is configured to store a computer program. When the computer program is run on a computer, the method in the first aspect, the second aspect, the third aspect, or any possible implementation thereof is performed.

According to a thirteenth aspect, an embodiment of this application provides a computer-readable storage medium. The computer-readable storage medium is configured to store a computer program. When the computer program is run on a computer, the method in the fourth aspect, the fifth aspect, or any possible implementation thereof is performed.

According to a fourteenth aspect, an embodiment of this application provides a computer program product. The computer program product includes a computer program or computer code. When the computer program product is run on a computer, the method in the first aspect, the second aspect, the third aspect, or any possible implementation thereof is performed.

According to a fifteenth aspect, an embodiment of this application provides a computer program product. The computer program product includes a computer program or computer code. When the computer program product is run on a computer, the method in the fourth aspect, the fifth aspect, or any possible implementation thereof is performed.

According to a sixteenth aspect, an embodiment of this application provides a multi-link communication system. The multi-link communication system includes a non-AP MLD and an AP MLD. Optionally, the non-AP MLD is configured to perform the method in the first aspect or any possible implementation of the first aspect, and the AP MLD is configured to perform the method in the fourth aspect or any possible implementation of the fourth aspect. Optionally, the non-AP MLD is configured to perform the method in the second aspect or any possible implementation of the second aspect, and the AP MLD is configured to perform the method in the fifth aspect or any possible implementation of the fifth aspect.

According to a seventeenth aspect, an embodiment of this application provides a multi-link communication system. The multi-link communication system includes a STA and an AP MLD. Optionally, the STA is configured to perform the method in the first aspect or any possible implementation of the first aspect, and the AP MLD is configured to perform the method in the fourth aspect or any possible implementation of the fourth aspect. Optionally, the STA is configured to perform the method in the second aspect or any possible implementation of the second aspect, and the AP MLD is configured to perform the method in the fifth aspect or any possible implementation of the fifth aspect. The AP MLD can be replaced with an AP.

### BRIEF DESCRIPTION OF DRAWINGS

To describe the technical solutions in embodiments of this application or in the background more clearly, the following briefly describes the accompanying drawings for describing embodiments of this application or the background.
FIG. 1A, FIG. 1B, and FIG. 1C each are a schematic diagram of a multi-link communication scenario according to an embodiment of this application;
FIG. 2 shows an example of a basic access process of a CSMA/CA mechanism;
FIG. 3 shows an example of backoff processes of a plurality of STAs under a DCF;
FIG. 4 shows an example of exponential growth of a CW;
FIG. 5 shows an example of EDCA parameter sets of services of different ACs according to an embodiment of this application;
FIG. 6 shows an example of a frame body of an MLE;
FIG. 7 is a schematic diagram of a working principle of an MU EDCA mechanism according to an embodiment of this application;
FIG. 8 is a flowchart of a communication method according to an embodiment of this application;
FIG. 9A, FIG. 9B, and FIG. 9C each are an example of a format of a priority access multi-link element field according to an embodiment of this application;
FIG. 10 is a flowchart of another communication method according to an embodiment of this application;
FIG. 11 is a flowchart of another communication method according to an embodiment of this application;
FIG. 12 is a flowchart of another communication method according to an embodiment of this application;
FIG. 13 is a flowchart of another communication method according to an embodiment of this application;
FIG. 14 is a flowchart of another communication method according to an embodiment of this application; and
FIG. 15 to FIG. 17 each are a schematic diagram of a structure of a communication apparatus according to an embodiment of this application.

### DESCRIPTION OF EMBODIMENTS

In the specification, claims, or accompanying drawings of this application, the terms "first", "second", and the like are intended only to distinguish between different objects but do not indicate a particular order. In addition, the terms "include", "comprise", and any variant thereof are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown in various locations in this specification may not necessarily mean a same embodiment, and is not an independent or optional embodiment exclusive from another embodiment. It is explicitly and implicitly understood by a person skilled in the art that embodiments described in this specification may be combined with another embodiment.

Terms used in the following embodiments of this application are merely intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly. It should be further understood that the term "and/or" used in this application indicates and includes any or all possible combinations of one or more listed items. For example, "A and/or B" may represent the following three cases: Only A exists, only B exists, and both A and B exist, where A and B may be singular or plural. In this application, the term "at least one" means one or more, and "a plurality of" means two or more. "At least one of the following items (pieces)" or a similar expression thereof indicates any combination of these items, including any combination of singular items (pieces) or plural items (pieces). For example, at least one of a, b, and c may indicate a, b, or c; a and b; a and c; b and c; or a, b, and c. Herein, a, b, and c each may be singular or plural.

The following first describes terms and technical features in embodiments of this application.

### Multi-link communication

With development of wireless technologies, increasingly more wireless devices support multi-link communication. For example, some wireless devices simultaneously perform communication on 2.4 GHz, 5 GHz, and 6 GHz frequency bands, or simultaneously perform communication on different channels of a same frequency band. In this way, a communication rate between wireless devices can be improved. A device that supports multi-link communication is usually referred to as a multi-link device (multi-link device, MLD).

The multi-link device includes one or more affiliated stations (station, STA). The affiliated station is a logical station, and may work on one link, one frequency band, one channel, or the like. The affiliated station may be an access point (access point, AP) or a non-access point station (non-access point station, non-AP STA). The multi-link device may be an access point device, or a station device. For ease of description, in this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device); or a multi-link device whose affiliated station is a non-AP STA is referred to as a multi-link non-AP, a multi-link non-AP device, a non-AP multi-link device (non-AP multi-link device, non-AP MLD), or the like. In the following description, the multi-link device whose affiliated station is an AP is referred to as an AP MLD, and the multi-link device whose affiliated station is a non-AP STA is referred to as a non-AP MLD. In the AP MLD, there are one or more affiliated APs. In the STA MLD, there are one or more affiliated STAs.

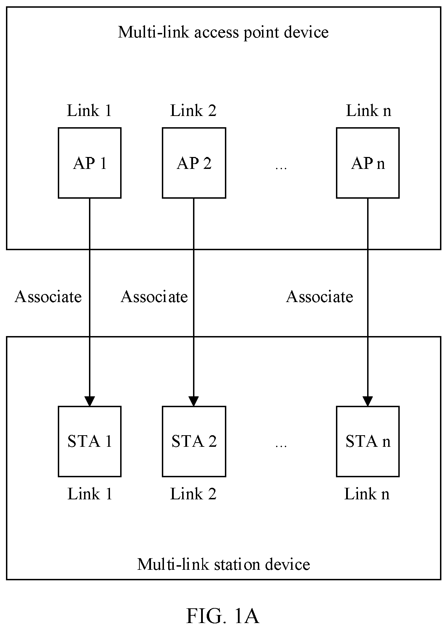

A station device may communicate with an access point device after multi-link establishment (or referred to as multi-link association). FIG. 1A is a schematic diagram of a multi-link communication scenario according to an embodiment of this application. As shown in FIG. 1A, a multi-link access point device includes n APs, for example, an AP 1 to an AP n; and a multi-link station device includes n STAs, for example, a STA 1 to a STA n. One AP in the multi-link access point device is associated with one STA in the multi-link station device. For example, the AP 1 is associated with the STA 1 through a link 1.

In a multi-link establishment (or multi-link association) process, a station in the multi-link station device may send an association request frame to an access point in the multi-link access point device. The association request frame carries a multi-link element (multi-link element, MLE) to carry information about the multi-link station device and information about another station in the device. The multi-link element may be referred to as a multi-link information element. Similarly, an association response frame returned by the access point to the station may also carry an MLE for carrying information about the multi-link access point device and information about another access point in the device.

The multi-link device (which may be a non-AP MLD or an AP MLD herein) is a communication apparatus having a wireless communication function. The communication apparatus may be an entire device, or may be a chip or a processing system installed in an entire device. The device in which the chip or the processing system is installed may implement the method and the function in embodiments of this application under control of the chip or the processing system. For example, the non-AP multi-link device in embodiments of this application has wireless sending and receiving functions, may support the 802.11 series protocols, and may communicate with the AP multi-link device or another non-AP multi-link device. For example, the non-AP multi-link device is any user communication device that allows a user to communicate with an AP and then communicate with a WLAN. For example, the non-AP multi-link device may be user equipment that can be connected to the Internet, such as a tablet computer, a desktop, a laptop, a notebook computer, an ultra-mobile personal computer (ultra-mobile personal computer, UMPC), a handheld computer, a netbook, a personal digital assistant (personal digital assistant, PDA), or a mobile phone; or an Internet of things node in the Internet of things; or an in-vehicle communication apparatus in the Internet of vehicles. Alternatively, the non-AP multi-link device may be a chip and a processing system in the foregoing terminals. The AP multi-link device may be an apparatus that provides a service for the non-AP multi-link device, and may support the 802.11 series protocols. For example, the AP multi-link device may be a communication entity such as a communication server, a router, a switch, or a bridge; or the AP multi-link device may include various forms of macro base stations, micro base stations, relay stations, and the like. Certainly, the AP multi-link device may be alternatively a chip and a processing system in the various forms of devices. The 802.11 protocol may be a protocol that supports 802.11be or that is compatible with 802.11be.

It may be understood that the multi-link device may support high-rate and low-latency transmission. With continuous evolution of application scenarios of a wireless local area network, the multi-link device may be further applied to more scenarios, for example, a sensor node (such as a smart meter, a smart electricity meter, or a smart air detection node) in a smart city, a smart device (such as a smart camera, a projector, a display, a television, a sounder, a refrigerator, or a washing machine) in a smart home, a node in the Internet of things, an entertainment terminal (such as AR, VR, or another wearable device), a smart device (such as a printer or a projector) in a smart office, an Internet of vehicles device in the Internet of vehicles, and some infrastructures (such as a vending machine, a self-service navigation station in a supermarket, a self-service cash register device, and a self-service ordering machine) in daily life scenarios. A specific form of the multi-link device is not limited in this embodiment of this application. This is merely an example for description herein.

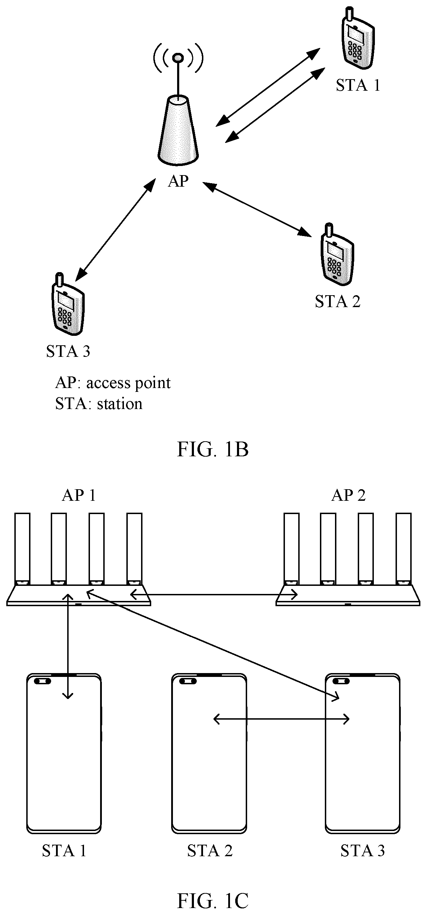

FIG. 1B is a schematic diagram of another multi-link communication scenario according to an embodiment of this application. As shown in FIG. 1B, at least one AP and at least one STA are included. FIG. 1B shows three STAs, such as a STA 1, a STA 2, and a STA 3. For example, the STA 1 may communicate with the AP through two links, and the two links may be represented by two arrows shown in FIG. 1B. For another example, the STA 2 or the STA 3 may communicate with the AP through one link. In other words, a system shown in FIG. 1B includes both multi-link communication and single-link communication.

FIG. 1C is a schematic diagram of another multi-link communication scenario according to an embodiment of this application. As shown in FIG. 1C, at least one AP and at least one STA are included. FIG. 1C shows three STAs, for example, a STA 1, a STA 2, and a STA 3. FIG. 1C shows two APs, for example, an AP 1 and an AP 2. For example, the STA 1 and the STA 3 may communicate with the AP 1 through different links, and the two links may be represented by two arrows shown in FIG. 1C. Two STAs can communicate. For example, the STA 2 and the STA 3 may communicate through a link therebetween. Different APs can communicate. For example, the AP 1 and the AP 2 may communicate through a link therebetween.

The method provided in this application may, but is not limited to, be applied to single-user uplink/downlink transmission, multi-user uplink/downlink transmission, vehicle-to-everything (vehicle-to-everything, V2X, where X may represent anything), and device-to-device (device-to-device, D2D). For example, V2X may include: vehicle to vehicle (vehicle to vehicle, V2V), vehicle to infrastructure (vehicle to infrastructure, V2I), vehicle to pedestrian (vehicle to pedestrian, V2P), or vehicle to network (vehicle to network, V2N) communication.

### Distributed coordination function (distributed coordination function, DCF)

To ensure that an AP and a STA can access a wireless medium (wireless medium) without collisions, the wireless local area network standard 802.11 uses a carrier sense multiple access with collision avoidance (carrier sense multiple access with collision avoidance, CSMA/CA) mechanism. The CSMA/CA mechanism is referred to as the DCF. A basic idea of the CSMA/CA mechanism is as follows: When a STA intends to send data, the STA needs to perform clear channel assessment (clear channel accessment, CCA) on the wireless medium. If a medium status (that is, a status of the wireless medium) is an idle state in a period of time (for example, DCF inter-frame space (DCF inter-frame space, DIFS)), the STA may start a random backoff process. If the medium status is a busy state, the STA needs to wait for a change of the medium status to the idle state, and start a random backoff process after the idle state is kept for a period of time (for example, DIFS). After the random backoff process ends, the STA may send the data. A random backoff time that the STA needs to perform backoff is a time obtained through multiplying a random backoff value by each slot (for example, 9 µs). The random backoff value is randomly selected from an evenly distributed window [0, CW]. The contention window (contention window, CW) has a plurality of values. The contention window takes a minimum value at an initial attempt (initial attempt), namely, CWmin. However, the CW gradually increases when retransmission (retransmission) needs to be performed each time transmission fails (for example, a conflict occurs), until a maximum value of the CW is reached, namely, CWmax. However, when the STA successfully sends data, the CW is reset (reset) to CWmin. A size of each window can be a difference between 2 raised to a power and 1, and is about twice a size at a previous level.

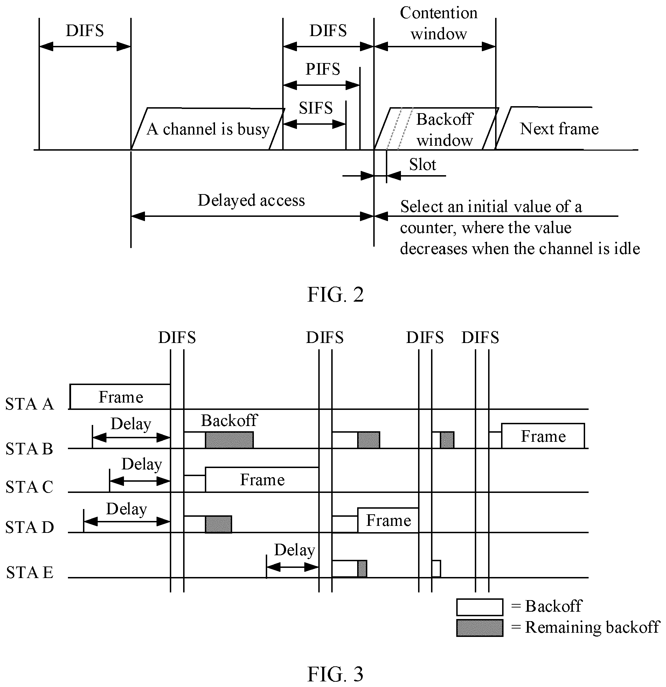

The CSMA/CA is based on carrier sensing (carrier sensing, CS). The DCF determines the medium status through both physical carrier sense and virtual carrier sense. The physical carrier sense function is located at a physical layer (physical layer, PHY), and determines, through energy detection (energy detection, ED) and preamble detection (preamble detection, PD), whether the medium is busy. The virtual carrier sense is located in a MAC, and determines, based on a duration field in a received radio frame, whether a channel is idle. After receiving the radio frame, the STA sets a value of a network allocation vector (network allocation vector, NAV) based on the duration field. The value of the NAV indicates a time length in which a station sending the radio frame needs to occupy a channel. After the STA sets the NAV, a countdown starts. When the countdown reaches 0, it indicates that the channel is idle. The channel is considered to be idle only when both a physical carrier sense mechanism and a virtual carrier sense mechanism consider that the channel is idle. Otherwise, the channel is considered to be busy. FIG. 2 shows an example of a basic access process of a CSMA/CA mechanism. As shown in FIG. 2, after a channel changes from a busy state to an idle state, a station starts a random backoff process after the idle state is kept for a period of time. The period of time may be any one of a DIFS, point coordination function (point coordination function, PCF) inter-frame space (PCF inter-frame space, PIFS), or short inter-frame space (short inter-frame space, SIFS). The station determines a random backoff time for backoff. A backoff window in FIG. 2 corresponds to the random backoff time. FIG. 3 shows an example of backoff processes of a plurality of STAs under a DCF. As shown in FIG. 3, at the beginning, a STA A sends a data frame, and a STA B, a STA C, and a STA D all delay sending of data frames. After the STAA sends the complete data frame (a channel becomes idle), the STA B, the STA C, and the STA D start a random backoff process. The STA C first completes the random backoff process, and the STA C sends the data frame. After the STA C sends the complete data frame (the channel becomes idle), the STA B, the STA D, and the STA E start a random backoff process. The STA D first completes the random backoff process, and the STA D sends the data frame. The rest may be deduced by analogy.

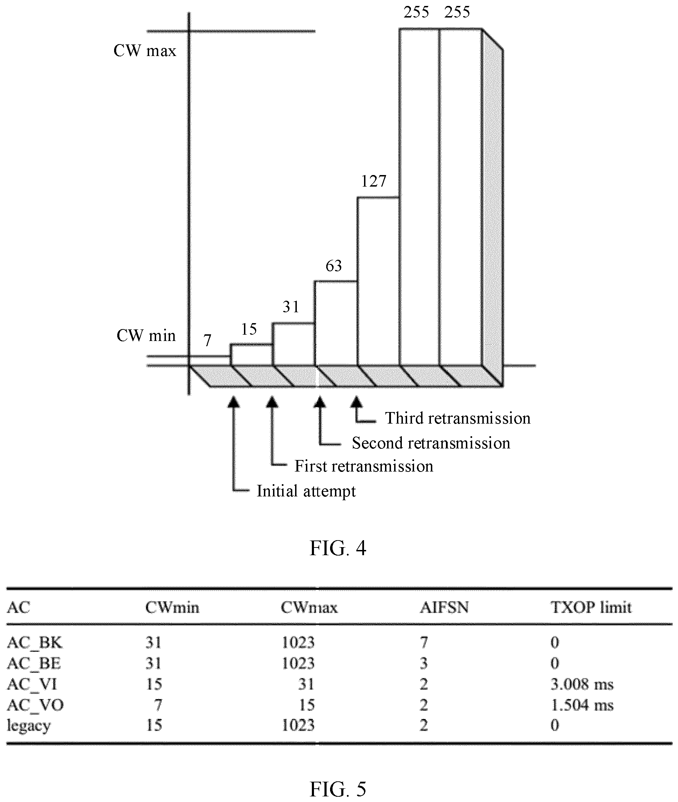

A random backoff time that a STA needs to perform backoff is a time obtained through multiplying a random backoff value by each slot. The random backoff value is randomly selected from an evenly distributed window [0, CW]. A contention window (contention window, CW) has a plurality of values. The contention window takes a minimum value at an initial attempt (initial attempt), namely, CWmin. However, the CW gradually increases when retransmission (retransmission) needs to be performed each time transmission fails (for example, a conflict occurs), until a maximum value of the CW is reached, namely, CWmax. However, when data is successfully sent, the CW is reset (reset) to CWmin. A size of each window can be a difference between 2 raised to a power and 1, and is about twice a size at a previous level. For ease of explanation, this is directly referred to as window doubling. FIG. 4 shows an example of exponential growth of a CW. As shown in FIG. 4, the CW is 7 in a first attempt of a station, the CW is 15 in a first retransmission (first retransmission), the CW is 31 in a second retransmission (second retransmission), the CW is 63 in a third retransmission (third retransmission), and so on.

### Enhanced distributed channel access (enhanced distributed channel access, EDCA) contention transmission

EDCA is an enhancement of the DCF mechanism. The EDCA allows services of different access categories (access category, AC) to have different EDCA parameter sets, including CWmin, CWmax, arbitration inter-frame space (arbitration interframe space, AIFS), and the like. FIG. 5 shows an example of EDCA parameter sets of services of different ACs according to an embodiment of this application. In FIG. 5, AIFSN represents an arbitration inter-frame spacing number (arbitration inter frame spacing number), TXOP represents a transmission opportunity (transmission opportunity), TXOP limit (limit) represents a transmission opportunity limit, and AC_BK, AC_BE, AC_VI, and AC_VO represent different ACs.

For a service of a specific AC, a backoff process of the service is basically the same as the backoff process of the DCF, and a difference is that the AIFS replaces the DIFS in the DCF. To be specific, when the channel returns to idle again, a STA needs to wait for the AIFS before performing the backoff process. A method for calculating the AIFS is as follows: AIFS[AC] = aSIFSTime + AIFSN[AC] * aSlotTime. For example, for a service whose access category is AC_BE, an EDCA parameter set of the service is { CWmin = 31, CWmax = 1023, AIFSN = 3}. Therefore, in an EDCA backoff process, the AIFS is aSIFSTime + 3 * aSlotTime. To be specific, when the channel returns to idle again, the STA needs to wait for aSIFSTime + 3 * aSlotTime before performing the backoff process. Herein, aSIFSTime represents a length of a slot, usually, 9 µs; and SIFSTime represents a length of SIFS, usually, 16 µs. In addition, an initial value of a backoff counter of the service should be randomly generated from [0, 31]. An AP sends an EDCA parameter set in a beacon (beacon) frame. All STAs perform EDCA channel contention by using EDCA parameters sent by the AP in beacon frames.

### Multi-link element (multi-link element, MLE)

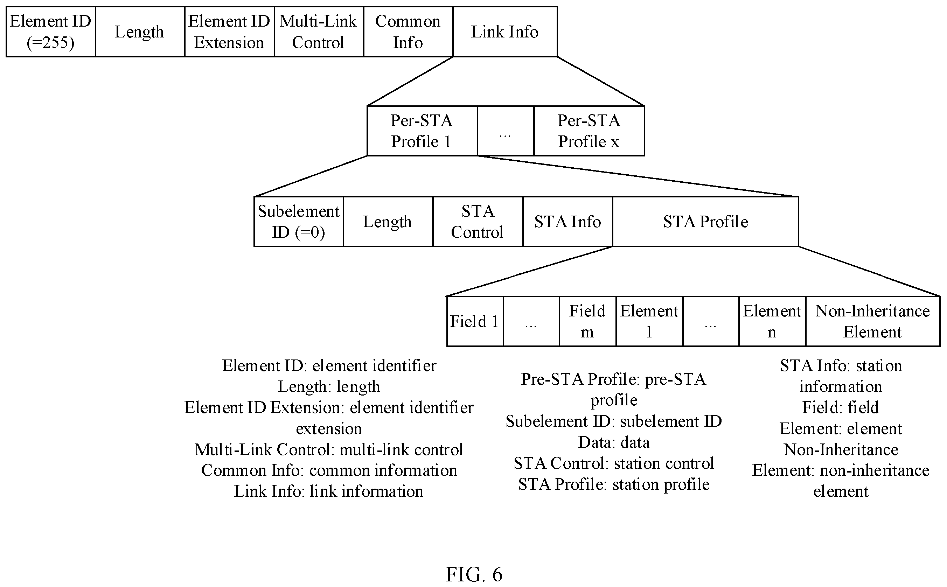

The multi-link element is used to carry multi-link device information and information about a station (including an access point) in a multi-link device. FIG. 6 shows an example of a frame body of an MLE. As shown in FIG. 6, the MLE includes an element identifier (element ID), a length (length), an element identifier extension (element ID extension), a multi-link control (multi-link control) field, a common information (common info) field, and a link information (link info) field. The common info field carries common information of a plurality of stations in a multi-link device and information about the multi-link device. The link info field carries information about a station on each link of the multi-link device. The multi-link control field carries a type of the multi-link element, and indication information indicating which fields appear and which fields do not appear in common info. For example, the link info field includes zero, one, or more per-STA profile (per-STA profile) sub-elements. As shown in FIG. 6, the link info field includes a per-STA profile 1 to a per-STA profile x, where x is an integer greater than 0. The per-STA profile sub-element may include a sub-element identifier (subelement ID), a length (length), a station control (STA control) field, a station information (STA info) field, and a station profile (STA profile) field. The STA profile field includes a field field, an element (element) field, and a non-inheritance element (non-inheritance element). As shown in FIG. 6, the STA profile field includes a field 1 to a field m, an element 1 to an element n, and a non-inheritance element.

### Multi-user (multi-user, MU) EDCA

Compared with 802.11ac and an earlier standard, a station meeting the 802.11ax standard has two uplink transmission manners: EDCA-based contention transmission and trigger frame-based uplink transmission. When the two transmission manners coexist, the station meeting the 802.11ax standard has more channel access opportunities than a legacy station (that is, a station not meeting the 802.11ax standard). This is obviously unfair to the legacy station. To maintain relative fairness, an MU EDCA mechanism is introduced in the 802.11ax standard, so that the legacy station is not obviously inferior when performing channel contention. In addition, because the trigger-based uplink transmission has higher transmission efficiency than the contention-based access transmission, it is expected that an AP can send more trigger frames to schedule uplink transmission. This can also be achieved through MU EDCA.

A basic idea of the MU EDCA mechanism is that after a station is triggered by an AP to send data (for example, receives a trigger frame), a priority of conventional EDCA access needs to be lowered. Specifically, the station performs channel access by using another EDCA parameter set, namely an MU EDCA parameter set. The station may perform channel access by using two groups (or two sets) of EDCA parameter sets. One group is a conventional EDCA parameter set, and the other group is an MU EDCA parameter set. Compared with performing channel access by using the conventional EDCA parameter set, performing channel access by the station by using the MU EDCA parameter set corresponds to a longer contention waiting time and a larger backoff window. Therefore, compared with performing channel access by using the conventional EDCA parameter set, performing channel access by using the MU EDCA parameter set has a lower priority.

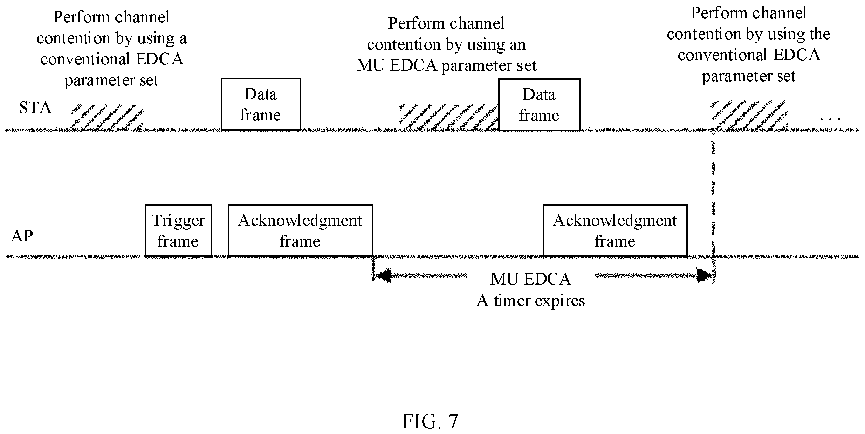

The AP adds two groups of EDCA parameter sets to a beacon frame or an associated response frame of a beacon frame. One group is a conventional EDCA parameter set, and the other group is an MU EDCA parameter set. As described above, parameters in the MU EDCA parameter set are more conservative, that is, a larger AIFSN, larger CWmin, and larger CWmax. It should be noted that the AIFSN, CWmin, and CWmax in the MU EDCA parameter set are not required to be all larger. When the station is not triggered, the station may perform EDCA contention by using the conventional EDCA parameter set. Once the station receives a trigger frame sent by the AP and performs uplink data transmission, the station needs to perform channel contention by using the MU EDCA parameter set within a period of time (for example, AIFS). A length of the period of time herein may be carried in the MU EDCA parameter set. If the station does not receive the trigger frame in the foregoing period of time and successfully completes uplink data transmission once, the station may return to a conventional EDCA contention manner, that is, perform channel contention by using the conventional EDCA parameter set. In this application, channel contention and channel access may be replaced with each other. FIG. 7 is a schematic diagram of a working principle of an MU EDCA mechanism according to an embodiment of this application. As shown in FIG. 7, a STA initially uses a conventional EDCA parameter set to perform channel contention. After receiving a trigger frame sent by an AP and sending a data frame, the STA uses an MU EDCA parameter set to perform channel contention. After an MU EDCA timer expires, the STA uses the conventional EDCA parameter set to perform channel contention. When the MU EDCA timer expires, it indicates that the STA does not receive the trigger frame within a period of time and successfully completes uplink data transmission once.

### EPCS priority access mechanism (EPCS priority access)

For an EPCS, 802.11be defines a priority access mechanism, so that an EPCS station can access a channel as soon as possible, to ensure priority transmission of an emergency service.

A station may send an EPCS priority access enable request (EPCS priority access enable request) frame to an access point to request an EPCS priority access opportunity. The access point may send an EPCS priority access enable response (EPCS priority access enable response) frame as a response. The EPCS priority access enable request frame and the EPCS priority access enable response frame may carry an EDCA parameter set to be used as parameters for EDCA channel access. If the EPCS priority access mechanism is successfully established, the station performs EDCA channel contention by using the parameters in the EDCA parameter set. Generally, the EDCA parameter set carried in the EPCS priority access enable request frame and the EPCS priority access enable response frame has a higher priority than an EDCA parameter set carried in a beacon frame, so that the EPCS station (or referred to as an EPCS STA) obtains a higher priority than a common station in EDCA contention. The EPCS station may be a station that can provide an EPCS. The common station may be a station that cannot provide an EPCS. The EPCS station can send an EPCS priority access enable request frame, but the common station cannot send an EPCS priority access enable request frame.

A non-AP MLD may also use the EPCS priority access mechanism. To be specific, one STA in the non-AP MLD sends a request, so that a plurality of STAs in the non-AP MLD can obtain a priority access right. For ease of description, the non-AP MLD that can use the EPCS priority access mechanism may be referred to as an EPCS non-AP MLD in this application.

As described above, according to a stipulation of the MU EDCA channel access mechanism, after receiving the trigger frame sent by the AP and successfully sending the data frame, the EPCS station uses the MU EDCA parameter set as parameters for channel access. However, all stations in an entire cell use a same MU EDCA parameter set. Therefore, after receiving the trigger frame sent by the AP and successfully sending the data frame, the EPCS station loses a channel access priority compared with the common station. This is obviously unreasonable. Therefore, how to ensure that the EPCS station and the EPCS non-AP MLD have higher channel access priorities than the common station in all scenarios needs to be studied.

A communication solution provided in this application is mainly applied to a multi-link communication scenario. FIG. 1A, FIG. 1B, and FIG. 1C each are a schematic diagram of a multi-link communication scenario according to an embodiment of this application.

With reference to the accompanying drawings, the following describes a communication solution that is provided in this application and that can ensure that an EPCS station and an EPCS non-AP MLD have higher channel access priorities than a common station in all scenarios.

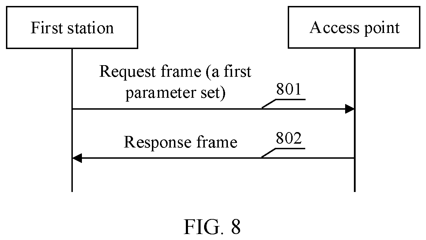

FIG. 8 is a flowchart of a communication method according to an embodiment of this application. As shown in FIG. 8, the method includes the following steps:
801: A first station sends a request frame to an access point.

The first station may be a single-link STA, or may be a station in a non-AP MLD. In other words, the first station may be an EPCS station or a station in an EPCS non-AP MLD. The access point may be a single-link AP, or may be an AP in an AP MLD.

The request frame is used to request to obtain a channel priority access right. Alternatively, the request frame is used to request to obtain channel access parameters with a higher priority. Alternatively, the request frame is used to request channel priority access. Alternatively, the request frame is used to request to obtain channel contention parameters with a higher priority. The request frame may be an EPCS priority access enable request (priority access enable request) frame, or may be a national security and emergency preparedness (national security & emergency preparedness, NSEP) priority access enable request (priority access enable request) frame, or may be another frame. A specific name of the request frame is not limited in this application.

The request frame carries a first parameter set. The first parameter set includes MU EDCA parameters that the first station intends to use to perform channel contention. For example, the first parameter set includes the MU EDCA parameters that the first station intends to use to perform channel contention after the first station successfully sends a data frame triggered based on a trigger frame of the access point. The MU EDCA parameters may include an AIFSN, CWmin, CWmax, a TXOP limit, and the like that correspond to each access category. A channel access priority of the first parameter set may be higher than a channel access priority of an MU EDCA parameter set used by a common station. How the request frame carries the first parameter set is described below with reference to a frame body of the request frame.

In a possible implementation, the request frame carries first indication information indicating the first parameter set. The first indication information may be an identifier of the first parameter set or a binary sequence indicating the first parameter set, for example, 10. The first station and the access point may agree in advance to use the first indication information to indicate the first parameter set, so that a volume of data carried in the request frame can be reduced.

It should be noted that there are two or more MU EDCA parameter sets in this application. One MU EDCA parameter set is used by the common station after the common station successfully sends a data frame triggered based on a received trigger frame, and another MU EDCA parameter set is used by the EPCS station (for example, the first station) after the EPCS station successfully sends the data frame triggered based on the received trigger frame. For example, after successfully sending the data frame triggered based on the received trigger frame, the common station performs channel access by using the parameters in the first MU EDCA parameter set; and after successfully sending the data frame triggered based on the received trigger frame, the first station performs channel access by using the parameters in the first parameter set, where the first parameter set is a second MU EDCA parameter set different from the first MU EDCA parameter set. In a possible implementation, after successfully sending data frames triggered based on received trigger frames, different EPCS stations may perform channel access by using different MU EDCA parameter sets.

In a possible implementation, the request frame further carries a second parameter set. The second parameter set includes MU EDCA parameters that a second station intends to use to perform channel contention. The second station and the first station belong to a same multi-link station device. In a possible implementation, the second parameter set is included in a link information field in an MLE in the request frame. How the request frame carries the second parameter set is described below with reference to a frame body of the request frame. It should be understood that the request frame may further carry MU EDCA parameters that one or more stations that belong to the same multi-link station device as the first station intend to use to perform channel contention. For example, the request frame further carries MU EDCA parameters that a station 1 intends to use to perform channel contention and MU EDCA parameters that a station 2 intends to use to perform channel contention, and the station 1, the station 2, and the first station all belong to the same multi-link station device.

802: The first station receives a response frame for the request frame.

In a possible implementation, the response frame carries a third parameter set. The third parameter set includes MU EDCA parameters that are to be used by the first station to perform channel contention. The third parameter set is the same as or different from the first parameter set.

It should be understood that, if the access point does not agree that the first station performs channel contention by using the parameters in the first parameter set, the access point may send the response frame carrying the third parameter set to the first station. The third parameter set includes the MU EDCA parameters that are to be used by the first station to perform channel contention. The third parameter set is different from the first parameter set. In this implementation, the response frame carries the third parameter set, so that the first station performs channel contention by using the parameters in the third parameter set, to ensure a channel access priority. How the response frame carries the third parameter set is described below with reference to a frame body of the response frame. It should be understood that, if the access point agrees that the first station performs channel contention by using the parameters in the first parameter set, the response frame sent by the access point to the first station may carry the third parameter set. In a possible implementation, the third parameter set includes or is equal to the first parameter set, or the first parameter set is a subset of the third parameter set. If the access point agrees that the first station performs channel contention by using the parameters in the first parameter set, the access point may also send, to the first station, the response frame that does not carry the third parameter set for the first station. In other words, the response frame that does not carry any parameter set for the first station is sent to the first station. This indicates that the first station is allowed by default to perform subsequent channel contention by using the first parameter set carried in the request frame of the first station. In this implementation, if the response frame does not carry the third parameter set, it indicates that the access point agrees that the first station performs channel contention by using the parameters in the first parameter set, to reduce a volume of data in the response frame.

In a possible implementation, the request frame further carries the second parameter set. The second parameter set includes the MU EDCA parameters that the second station intends to use to perform channel contention. The second station and the first station belong to a same multi-link station device. Correspondingly, the response frame further carries a fourth parameter set. The fourth parameter set includes MU EDCA parameters that are to be used by the second station to perform channel contention. The fourth parameter set is the same as or different from the second parameter set. It should be understood that, if the access point agrees that the second station performs channel contention by using the parameters in the second parameter set, the response frame sent by the access point to the first station may carry the fourth parameter set. In a possible implementation, the fourth parameter set includes or is equal to the second parameter set, or the second parameter set is a subset of the fourth parameter set. If the access point agrees that the second station performs channel contention by using the parameters in the second parameter set, the access point may also send, to the first station, the response frame that does not carry the fourth parameter set for the first station. In other words, the response frame that does not carry any parameter set for the second station is sent to the second station. This indicates that the second station is allowed by default to perform subsequent channel contention by using the second parameter set carried in the request frame of the first station. How the response frame carries the fourth parameter set is described below with reference to the frame body of the response frame.

In some possible implementations, the request frame sent by the first station may not carry the MU EDCA parameters that the first station intends to use to perform channel contention. In other words, the first station may carry only an MU EDCA parameter set that one or more stations that belong to a same multi-link station device as the first station intend to use to perform channel contention. The response frame sent by the access point for the first station may carry only an MU EDCA parameter set that the one or more stations that belong to the same multi-link station device as the first station are allowed to use to perform channel contention.

The method procedure in FIG. 8 may be replaced by the following: The first station sends the request frame to the access point. The request frame carries the second parameter set. The second parameter set includes the MU EDCA parameters that the second station intends to use to perform channel contention. The second station and the first station belong to the same multi-link station device. The access point sends the response frame to the first station. The response frame carries the fourth parameter set. The fourth parameter set includes the MU EDCA parameters that the access point allows the second station to use to perform channel contention. The fourth parameter set is the same as or different from the second parameter set. The response frame may carry only the fourth parameter set. It should be understood that, if the access point agrees that the second station performs channel contention by using the parameters in the second parameter set, the response frame sent by the access point to the first station may carry the fourth parameter set. In a possible implementation, the fourth parameter set includes or is equal to the second parameter set, or the second parameter set is a subset of the fourth parameter set. If the access point agrees that the second station performs channel contention by using the parameters in the second parameter set, the access point may also send, to the first station, the response frame that does not carry the fourth parameter set. In other words, the response frame that does not carry any parameter set is sent. This indicates that the second station is allowed by default to perform subsequent channel contention by using the second parameter set carried in the request frame of the first station. How the request frame carries the second parameter set is described below with reference to the frame body of the request frame.

In this embodiment of this application, the request frame carries the first parameter set. The first parameter set includes the MU EDCA parameters that the first station intends to use to perform channel contention, to perform channel contention by using parameters with a higher channel priority.

The following describes the frame body of the request frame with reference to the accompanying drawings or tables; and further describes, with reference to the frame body of the request frame, how the request frame carries the first parameter set and how the request frame carries the second parameter set.

### Frame body 1 of the request frame:

Table 1 shows an example of fields included in the frame body 1 of the request frame. With reference to Table 1, the first parameter set is included in an MU EDCA parameter set (parameter set) field in the request frame. In other words, the MU EDCA parameter set field in Table 1 carries the first parameter set.

**Table 1**

| Order (order) | Meaning (meaning) |
|---|---|
| 1 | Category |
| 2 | Protected EHT action |
| 3 | Dialog token |
| 4 | EDCA parameter set |
| 5 | MU EDCA parameter set |
| 6 | Priority access multi-link element |

The order (order) in Table 1 is merely an example for description. This is not limited in this embodiment of the present invention.

The category (category) field indicates a type of an action frame. A value of the category field may be a protected EHT action (protected EHT action), to indicate that the action frame is in a "protected EHT action" category.

The protected EHT action field indicates a sub-category of the action frame. In a possible implementation, a value of the protected EHT action field is an EPCS priority access enable request, to indicate that the action frame is an EPCS priority access enable request frame. In another possible implementation, a value of the protected EHT action field is an NSEP priority access enable request, to indicate that the action frame is an NSEP priority access enable request frame.

The dialog token (dialog token) field is used to pair a request (request) frame and a response (response) frame.

The EDCA parameter set (parameter set) field indicates an EDCA parameter set that the first station intends to use.

The MU EDCA parameter set (parameter set) field indicates an MU EDCA parameter set that the first STA intends to use, namely, the first parameter set.

The priority access multi-link element (priority access multi-link element) field is used to carry an EDCA parameter set and an MU EDCA parameter set that one or more stations that belong to the same multi-link station device as the first station intend to use. For example, the priority access multi-link element field is used to carry an EDCA parameter set and an MU EDCA parameter set that the second station intends to use, and the second station and the first station belong to the same multi-link station device. The priority access multi-link element field may be replaced by a basic multi-link element (basic multi-link element) or another field, provided that the field carries the EDCA parameter set and the MU EDCA parameter set that the second station intends to use. This is not limited in this application. The priority access multi-link element field may also be replaced by a link identifier bitmap (link ID bitmap) field plus a parameter set field list. The parameter set field includes an EDCA parameter set and/or an MU EDCA parameter set. The link ID bitmap field is a bitmap of a link identifier. Each bit in the bitmap indicates whether a subsequent parameter set field list includes a parameter set of a corresponding link. For example, a length of the link ID bitmap field is 16 bits, each bit corresponds to one link, and the link ID bitmap field may correspond to 16 links in total. If a value of an i^{th} bit in the link ID bitmap field is 1, it indicates that a subsequent parameter set field list includes a parameter set of a link whose link ID is (i-1). A value of i ranges from 1 to 16, and a value of the link ID ranges from 0 to 15.

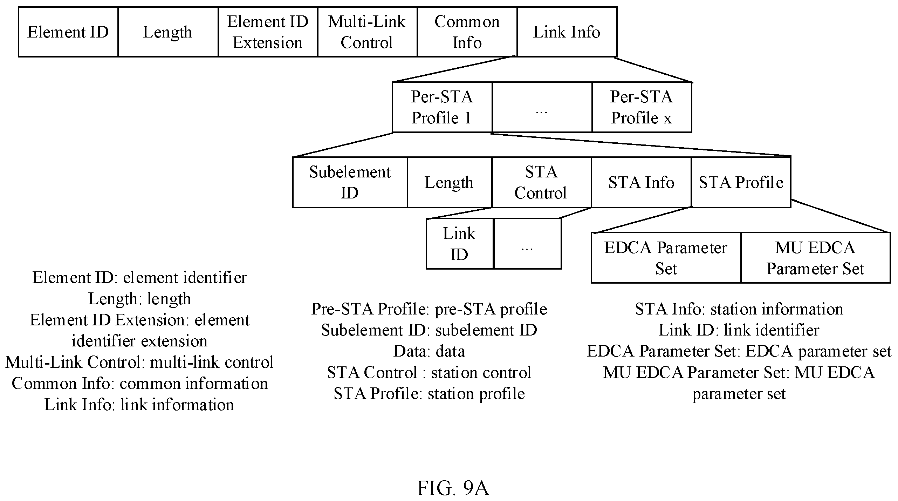

The priority access multi-link element field is optional instead of mandatory. It may be understood that when the first station is an independent station, the request frame sent by the first station does not need to carry an EDCA parameter set and an MU EDCA parameter set that another station intends to use. When the first station is a station in a non-AP MLD, the request frame sent by the first station may carry an EDCA parameter set and an MU EDCA parameter set that one or more stations that belong to the same multi-link station device as the first station intend to use, or may not carry an EDCA parameter set and an MU EDCA parameter set that another station intends to use. FIG. 9A is an example of a format of a priority access multi-link element field according to an embodiment of this application. A difference between the format of the priority access multi-link element field shown in FIG. 9A and the format of the MLE in FIG. 6 is different information included in the STA profile field. For meanings of fields in FIG. 9A, refer to the meanings of the fields in FIG. 6. The STA profile field in the priority access multi-link element field may include an EDCA parameter set and an MU EDCA parameter set. As shown in FIG. 9A, a STA control field includes a link identifier (link ID).

In a possible implementation, the priority access multi-link element field includes one or more per-STA profiles. Each per-STA profile corresponds to one station that belongs to the same multi-link station device as the first station. Each per-STA profile includes an EDCA parameter set and an MU EDCA parameter set that the station corresponding to the per-STA profile intends to use. Any two per-STA profiles correspond to different stations. As shown in FIG. 9A, the priority access multi-link element field includes a per-STA profile 1, a per-STA profile 2, ..., and a per-STA profile x. The per-STA profile 1 corresponds to a station 1, the per-STA profile 2 corresponds to a station 2, ..., and the per-STA profile x corresponds to a station x. The per-STA profile 1 includes an EDCA parameter set and an MU EDCA parameter set that the station 1 intends to use. The per-STA profile 2 includes an EDCA parameter set and an MU EDCA parameter set that the station 2 intends to use. By analogy, the per-STA profile x includes an EDCA parameter set and an MU EDCA parameter set that the station x intends to use. Herein, x is an integer greater than 1. The station 1, the station 2, ..., and the station x all belong to the same multi-link station device as the first station. For example, a STA profile field in each per-STA profile in the priority access multi-link element field includes the EDCA parameter set and the MU EDCA parameter set that the station corresponding to the per-STA profile intends to use. For example, the priority access multi-link element field includes the per-STA profile 1 and the per-STA profile 2. The per-STA profile 1 corresponds to the station 1. The per-STA profile 2 corresponds to the station 2. A STA profile field in the per-STA profile 1 includes the EDCA parameter set and the MU EDCA parameter set that the station 1 intends to use. A STA profile field in the per-STA profile 2 includes the EDCA parameter set and the MU EDCA parameter set that the station 2 intends to use. In this example, the station 1 and the station 2 belong to a same multi-link station device. In a possible implementation, the STA control field in the per-STA profile includes a link (link) ID corresponding to one station, and the station corresponds to the per-STA profile. For example, the priority access multi-link element field includes the per-STA profile 1 and the per-STA profile 2. The per-STA profile 1 corresponds to the station 1. The per-STA profile 2 corresponds to the station 2. A STA control field in the per-STA profile 1 includes a link ID corresponding to the station 1. A STA control field in the per-STA profile 2 includes a link ID corresponding to the station 2. A link ID corresponding to a station is an ID of a link by using which the station accesses an access point. A link identifier in the STA control field indicates a link or a station. The access point may determine, based on the link ID included in the STA control field in the per-STA profile, the station corresponding to the per-STA profile. The EDCA parameter set and the MU EDCA parameter set in the STA profile field in the per-STA profile are the EDCA parameter set and the MU EDCA parameter set that the station intends to use.

### Frame body 2 of the request frame:

Table 2 shows an example of fields included in the frame body 2 of the request frame. With reference to Table 2, the first parameter set is included in the priority access multi-link element field. In other words, the priority access multi-link element field in Table 2 carries the first parameter set. The first parameter set is included in the priority access multi-link element field. The priority access multi-link element field in Table 2 represents the MLE in the request frame. In other words, the first parameter set is included in the MLE in the request frame. The order (order) in Table 2 is merely an example for description. This is not limited in this embodiment of the present invention. Meanings of fields in Table 2 have been described when Table 1 is described. Therefore, details are not described herein again.

**Table 2**

| Order (order) | Meaning (meaning) |
|---|---|
| 1 | Category |
| 2 | Protected EHT action |
| 3 | Dialog token |
| 4 | Priority access multi-link element |

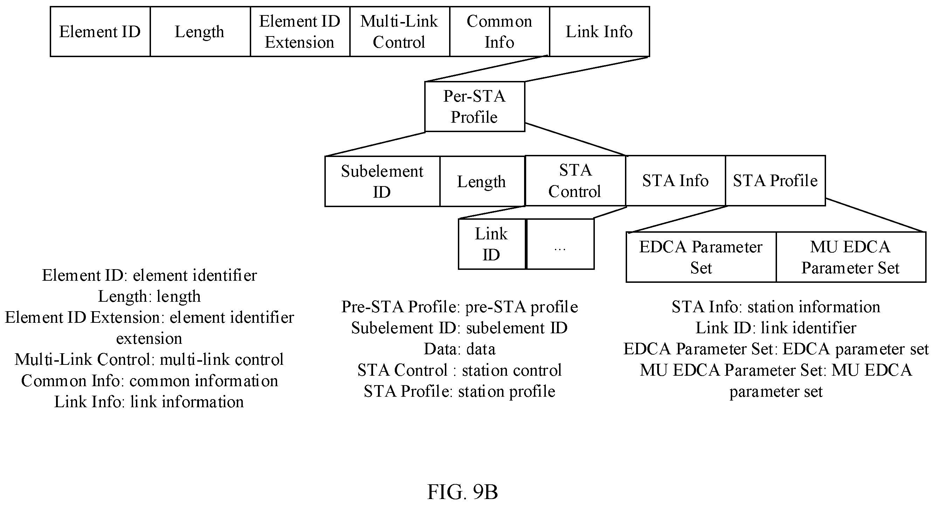

In a possible implementation, the first parameter set is included in a link information (link info) field in the priority access multi-link element field. FIG. 9B is an example of a format of another priority access multi-link element field according to an embodiment of this application. For meanings of fields in FIG. 9B, refer to the descriptions of the fields in FIG. 6. FIG. 9B shows a priority access multi-link element field in a request frame, and an MU EDCA parameter set represents a first parameter set. When FIG. 9B is compared with FIG. 9A, one per-STA profile in FIG. 9B corresponds to a first station, and x per-STA profiles in FIG. 9A correspond to x stations that belong to a same multi-link station device as the first station.

In a possible implementation, the priority access multi-link element field includes the per-STA profile corresponding to the first station, and the per-STA profile includes an EDCA parameter set and an MU EDCA parameter set that the first station intends to use. For example, a STA profile field in the per-STA profile in the priority access multi-link element field includes the EDCA parameter set and the MU EDCA parameter set that the first station corresponding to the per-STA profile intends to use. In a possible implementation, a STA control field in the per-STA profile includes a link ID corresponding to the first station, and the first station corresponds to the per-STA profile. As shown in FIG. 9B, a link information field includes the per-STA profile, and the per-STA profile corresponds to the first station. The per-STA profile includes the STA control field and the STA profile field. The STA control field includes the link ID. The STA profile field includes the EDCA parameter set and the MU EDCA parameter set. The link identifier in the STA control field indicates the first station. The link identifier in the STA control field indicates the first station. The access point may determine, based on the link ID included in the STA control field in the per-STA profile, the station corresponding to the per-STA profile. The EDCA parameter set and the MU EDCA parameter set in the STA profile field in the per-STA profile are the EDCA parameter set and the MU EDCA parameter set that the station intends to use.

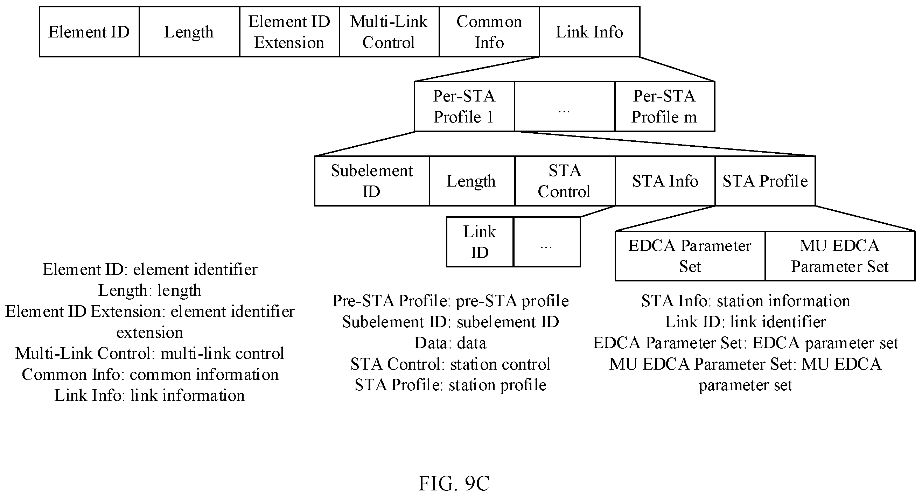

In a possible implementation, the priority access multi-link element field includes a plurality of per-STA profiles. One of the plurality of per-STA profiles corresponds to the first station. Another one of the plurality of per-STA profiles corresponds to one station that belongs to a same multi-link station device as the first station. Each per-STA profile includes an EDCA parameter set and an MU EDCA parameter set that a station corresponding to the per-STA profile intends to use. Any two per-STA profiles correspond to different stations. FIG. 9C is an example of a format of another priority access multi-link element field according to an embodiment of this application. As shown in FIG. 9C, the priority access multi-link element field includes a per-STA profile 1, a per-STA profile 2, ..., and a per-STA profile m. The per-STA profile 1 corresponds to a first station, the per-STA profile 2 corresponds to a station 2, ..., and the per-STA profile m corresponds to a station m. The per-STA profile 1 includes an EDCA parameter set and an MU EDCA parameter set that the first station intends to use. The per-STA profile 2 includes an EDCA parameter set and an MU EDCA parameter set that the station 2 intends to use. By analogy, the per-STA profile m includes an EDCA parameter set and an MU EDCA parameter set that the station m intends to use. Herein, m is an integer greater than 1. The station 2, a station 3, ..., and the station m all belong to a same multi-link station device as the first station. For example, a STA profile field in each per-STA profile in the priority access multi-link element field includes an EDCA parameter set and an MU EDCA parameter set that a station corresponding to the per-STA profile intends to use. For example, the priority access multi-link element field includes the per-STA profile 1 and the per-STA profile 2. The per-STA profile 1 corresponds to the first station. The per-STA profile 2 corresponds to the station 2. A STA profile field in the per-STA profile 1 includes the EDCA parameter set and the MU EDCA parameter set that the first station intends to use. A STA profile field in the per-STA profile 2 includes the EDCA parameter set and the MU EDCA parameter set that the station 2 intends to use. In this example, the station 2 and the first station belong to a same multi-link station device. In a possible implementation, a STA control field in the per-STA profile includes a link ID corresponding to one station, and the station corresponds to the per-STA profile. For example, the priority access multi-link element field includes the per-STA profile 1 and the per-STA profile 2. The per-STA profile 1 corresponds to the first station. The per-STA profile 2 corresponds to the station 2. A STA control field in the per-STA profile 1 includes a link ID corresponding to the first station. A STA control field in the per-STA profile 2 includes a link ID corresponding to the station 2. A link ID corresponding to a station is an ID of a link by using which the station accesses an access point. The link identifier in the STA control field included in the per-STA profile indicates a station or a link. The STA profile in the per-STA profile includes an EDCA parameter set and an MU EDCA parameter set that the station intends to use. The access point may determine, based on the link ID included in the STA control field in the per-STA profile, the station corresponding to the per-STA profile. The EDCA parameter set and the MU EDCA parameter set in the STA profile field in the per-STA profile are the EDCA parameter set and the MU EDCA parameter set that the station intends to use.

In a possible implementation, the request frame sent by the first station carries only an MU EDCA parameter set that one or more stations that belong to a same multi-link station device as the first station intend to use to perform channel contention, and the MU EDCA parameter set may be included in a link information (link info) field in the priority access multi-link element field. In this possible implementation, the priority access multi-link element field includes a plurality of per-STA profiles. Each of the plurality of per-STA profiles corresponds to one station that belongs to the same multi-link station device as the first station. Each per-STA profile includes an EDCA parameter set and an MU EDCA parameter set that the station corresponding to the per-STA profile intends to use. Any two per-STA profiles correspond to different stations. In this implementation, the link information (link info) field in the priority access multi-link element field does not carry the EDCA parameter set and the MU EDCA parameter set that the first station intends to use.

The following describes a frame body of a response frame with reference to the accompanying drawings or tables, and further describes, with reference to the frame body of the response frame, how the response frame carries a third parameter set and how the response frame carries a fourth parameter set.

### Frame body 1 of the response frame:

Table 3 shows an example of fields included in the frame body 1 of the response frame. With reference to Table 3, the third parameter set is included in an MU EDCA parameter set (parameter set) field in the response frame. In other words, the MU EDCA parameter set field in Table 3 carries the third parameter set.

**Table 3**

| Order | Meaning |
|---|---|
| 1 | Category |
| 2 | Protected EHT action |
| 3 | Dialog token |
| 4 | Status code |
| 5 | EDCA parameter set |
| 6 | MU EDCA parameter set |
| 7 | Priority access multi-link element |

The order (order) in Table 3 is merely an example for description. This is not limited in this embodiment of the present invention.

Meanings of the first three fields in Table 3 are the same as the meanings of the first three fields in Table 1. A difference is that a value of the protected EHT action field is an EPCS priority access enable response.

The status code (status code) field indicates whether an EPCS is successfully established.

The EDCA parameter set indicates an EDCA parameter set that an access point allows a first station to use.

The MU EDCA parameter set indicates an MU EDCA parameter set that the access point allows the first station to use, namely, the third parameter set. It should be understood that, if the access point allows the first station to use the EDCA parameter set or the MU EDCA parameter set in the request frame, the EDCA parameter set or the MU EDCA parameter set may be not carried in the response frame.

The priority access multi-link element (priority access multi-link element) field is used to carry an EDCA parameter set and an MU EDCA parameter set that the access point allows one or more stations that belong to the same multi-link station device as the first station to use. For example, the priority access multi-link element field is used to carry an EDCA parameter set and an MU EDCA parameter set (namely, the fourth parameter set) that are the access point allows a second station to use, and the second station and the first station belong to the same multi-link station device. The priority access multi-link element field may be replaced by a basic multi-link element (basic multi-link element) or another field, provided that the field carries the EDCA parameter set and the MU EDCA parameter set that the access point allows the second station to use. This is not limited in this application. The priority access multi-link element field is optional instead of mandatory. It should be understood that, if the access point allows the second station to use the EDCA parameter set or the MU EDCA parameter set in the request frame, the EDCA parameter set or the MU EDCA parameter set that the second station is allowed to use may be not carried in the response frame. FIG. 9A shows an example of a format of a priority access multi-link element field in a response frame. As shown in FIG. 9A, a STA profile field in the priority access multi-link element field in the response frame may include an EDCA parameter set and an MU EDCA parameter set.

In a possible implementation, the priority access multi-link element field includes one or more per-STA profiles. Each per-STA profile corresponds to one station that belongs to the same multi-link station device as the first station. Each per-STA profile includes an EDCA parameter set and an MU EDCA parameter set that the access point allows the station corresponding to the per-STA profile to use. Any two per-STA profiles correspond to different stations. As shown in FIG. 9A, the priority access multi-link element field includes a per-STA profile 1, a per-STA profile 2, ..., and a per-STA profile x. The per-STA profile 1 corresponds to a station 1, the per-STA profile 2 corresponds to a station 2, ..., and the per-STA profile x corresponds to a station x. The per-STA profile 1 includes an EDCA parameter set and an MU EDCA parameter set that the access point allows the station 1 to use. The per-STA profile 2 includes an EDCA parameter set and an MU EDCA parameter set that the access point allows the station 2 to use. By analogy, the per-STA profile x includes an EDCA parameter set and an MU EDCA parameter set that the access point allows the station x to use. Herein, x is an integer greater than 1. The station 1, the station 2, ..., and the station x all belong to the same multi-link station device as the first station. For example, a STA profile field in each per-STA profile in the priority access multi-link element field includes an EDCA parameter set and an MU EDCA parameter set that the access point allows a station corresponding to the per-STA profile to use. For example, the priority access multi-link element field includes the per-STA profile 1 and the per-STA profile 2. The per-STA profile 1 corresponds to the station 1. The per-STA profile 2 corresponds to the station 2. A STA profile field in the per-STA profile 1 includes the EDCA parameter set and the MU EDCA parameter set that the access point allows the station 1 to use. A STA profile field in the per-STA profile 2 includes the EDCA parameter set and the MU EDCA parameter set that the access point allows the station 2 to use. In this example, the station 1 and the station 2 belong to the same multi-link station device. In a possible implementation, a STA control field in the per-STA profile includes a link ID corresponding to one station, and the station corresponds to the per-STA profile. For example, the priority access multi-link element field includes the per-STA profile 1 and the per-STA profile 2. The per-STA profile 1 corresponds to the station 1. The per-STA profile 2 corresponds to the station 2. A STA control field in the per-STA profile 1 includes a link ID corresponding to the station 1. A STA control field in the per-STA profile 2 includes a link ID corresponding to the station 2. The link identifier in the STA control field included in the per-STA profile indicates a station. The STA profile in the per-STA profile includes an EDCA parameter set and an MU EDCA parameter set that the access point allows the station to use. The first station may determine, based on the link ID included in the STA control field in the per-STA profile, the station corresponding to the per-STA profile. The EDCA parameter set and the MU EDCA parameter set in the STA profile field in the per-STA profile are the EDCA parameter set and the MU EDCA parameter set that the access point allows the station to use.

### Frame body 2 of the response frame:

Table 4 shows an example of fields included in the frame body 2 of the response frame. With reference to Table 4, the third parameter set is included in the priority access multi-link element field. In other words, the priority access multi-link element field in Table 4 carries the third parameter set. The priority access multi-link element field in Table 4 represents an MLE in the response frame. In other words, the third parameter set is included in the MLE in the response frame. The order (order) in Table 4 is merely an example for description. This is not limited in this embodiment of the present invention. Meanings of fields in Table 4 have been described when Table 3 is described. Therefore, details are not described herein again.

**Table 4**

| Order | Meaning |
|---|---|
| 1 | Category |
| 2 | Protected EHT action |
| 3 | Dialog token |
| 4 | Status code |
| 5 | Priority access multi-link element |

In a possible implementation, the third parameter set is included in a link information (link info) field in the priority access multi-link element field. FIG. 9B is still used. FIG. 9B shows a priority access multi-link element field in a response frame. In FIG. 9B, an MU EDCA parameter set represents a third parameter set, the third parameter set is included in a STA profile field, the STA profile field is included in a per-STA profile, and the per-STA profile is included in a link info field.

In a possible implementation, the priority access multi-link element field includes a per-STA profile corresponding to a first station, and the per-STA profile includes an EDCA parameter set and an MU EDCA parameter set (that is, the third parameter set) that an access point allows the first station to use. For example, a STA profile field in the per-STA profile in the priority access multi-link element field includes the EDCA parameter set and the MU EDCA parameter set that the access point allows the first station corresponding to the per-STA profile to use. In a possible implementation, a STA control field in the per-STA profile includes a link ID corresponding to the first station, and the first station corresponds to the per-STA profile. As shown in FIG. 9B, a link information field includes the per-STA profile, and the per-STA profile corresponds to the first station. The per-STA profile includes the STA control field and the STA profile field. The STA control field includes the link ID. The STA profile field includes the EDCA parameter set and the MU EDCA parameter set. It should be understood that the first station may obtain, based on the STA control field and the STA profile field in the priority access multi-link element field, the EDCA parameter set and the MU EDCA parameter set that are to be used by the first station, namely, the EDCA parameter set and the MU EDCA parameter set that the access point allows the first station to use.

In a possible implementation, the priority access multi-link element field includes a plurality of per-STA profiles. One of the plurality of per-STA profiles corresponds to the first station. Another one of the plurality of per-STA profiles corresponds to one station that belongs to a same multi-link station device as the first station. Each per-STA profile includes an EDCA parameter set and an MU EDCA parameter set that the access point allows a station corresponding to the per-STA profile to use. Any two per-STA profiles correspond to different stations. A priority access multi-link element field in FIG. 9C may be considered as a priority access multi-link element field in a response frame. As shown in FIG. 9C, the priority access multi-link element field includes a per-STA profile 1, a per-STA profile 2, ..., and a per-STA profile m. The per-STA profile 1 corresponds to a first station, the per-STA profile 2 corresponds to a station 2, ..., and the per-STA profile m corresponds to a station m. The per-STA profile 1 includes an EDCA parameter set and an MU EDCA parameter set that an access point allows the first station to use. The per-STA profile 2 includes an EDCA parameter set and an MU EDCA parameter set that are the access point allows the station 2 to use. By analogy, the per-STA profile m includes an EDCA parameter set and an MU EDCA parameter set that the access point allows the station m to use. Herein, m is an integer greater than 1. The station 2, a station 3, ..., and the station m all belong to a same multi-link station device as the first station. For example, a STA profile field in each per-STA profile in the priority access multi-link element field includes an EDCA parameter set and an MU EDCA parameter set that the access point allows a station corresponding to the per-STA profile to use. For example, the priority access multi-link element field includes the per-STA profile 1 and the per-STA profile 2. The per-STA profile 1 corresponds to the first station. The per-STA profile 2 corresponds to the station 2. A STA profile field in the per-STA profile 1 includes the EDCA parameter set and the MU EDCA parameter set that the access point allows the first station to use. A STA profile field in the per-STA profile 2 includes the EDCA parameter set and the MU EDCA parameter set that the access point allows the station 2 to use. In this example, the station 2 and the first station belong to the same multi-link station device. In a possible implementation, a STA control field in the per-STA profile includes a link ID corresponding to one station, and the station corresponds to the per-STA profile. For example, the priority access multi-link element field includes the per-STA profile 1 and the per-STA profile 2. The per-STA profile 1 corresponds to the first station. The per-STA profile 2 corresponds to the station 2. A STA control field in the per-STA profile 1 includes a link ID corresponding to the first station. A STA control field in the per-STA profile 2 includes a link ID corresponding to the station 2. The first station may determine, based on the link ID included in the STA control field in the per-STA profile, the station corresponding to the per-STA profile. The EDCA parameter set and the MU EDCA parameter set in the STA profile field in the per-STA profile are the EDCA parameter set and the MU EDCA parameter set that the access point allows the station to use.

In a possible implementation, the response frame sent by the access point carries only an MU EDCA parameter set that is to be used to perform channel contention by one or more stations that belong to a same multi-link station device as the first station, and the MU EDCA parameter set may be included in a link information (link info) field in the priority access multi-link element field. In this possible implementation, the priority access multi-link element field includes a plurality of per-STA profiles. Each of the plurality of per-STA profiles corresponds to one station that belongs to the same multi-link station device as the first station. Each per-STA profile includes an EDCA parameter set and an MU EDCA parameter set that the access point allows the station corresponding to the per-STA profile to use. Any two per-STA profiles correspond to different stations. In this implementation, the link information (link info) field in the priority access multi-link element field does not carry the EDCA parameter set and the MU EDCA parameter set that the access point allows the first station to use.

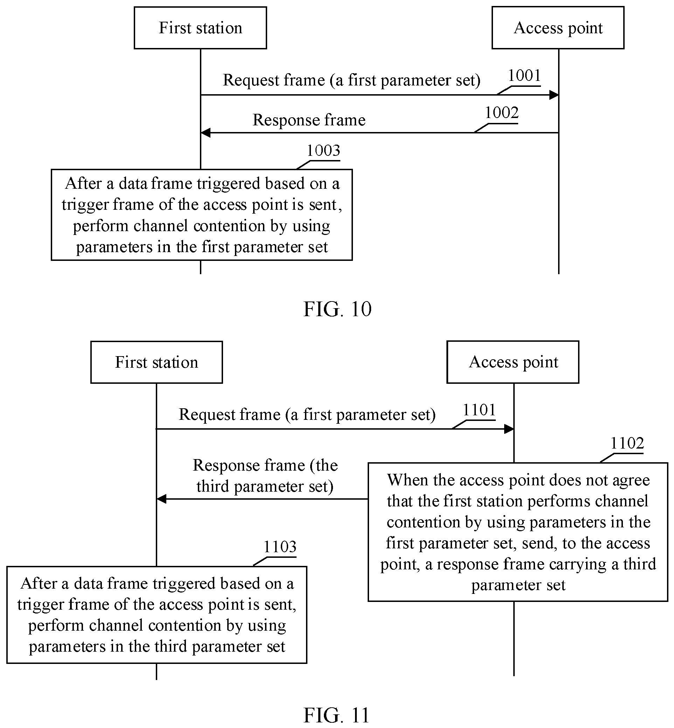

FIG. 10 is a flowchart of another communication method according to an embodiment of this application. A method procedure in FIG. 10 is a possible implementation of the method in FIG. 8. As shown in FIG. 10, the method includes the following steps:
1001: A first station sends a request frame to an access point.
   Before sending the request frame to the access point, the first station may generate the request frame. For step 1001, refer to step 801. The request frame carries a first parameter set. A channel access priority of the first parameter set is higher than a channel access priority of an MU EDCA parameter set used by a common station.
1002: The access point sends a response frame for the request frame to the first station.

Table 5 is an example of fields in the response frame that is sent by the access point to the first station. For meanings of fields in Table 5, refer to the meanings of the fields in Table 3.

**Table 5**

| Order | Meaning |
|---|---|
| 1 | Category |
| 2 | Protected EHT action |
| 3 | Dialog token |
| 4 | Status code |
| 5 | EDCA parameter set |

1003: After sending a data frame triggered based on a trigger frame of the access point, the first station performs channel contention by using parameters in the first parameter set.

A possible implementation of step 1003 is as follows: After sending the data frame triggered based on the trigger frame of the access point, the first station performs channel contention within first duration by using the parameters in the first parameter set. The first duration is obtained based on a parameter in the first parameter set. The first parameter may include an AIFSN, CWmin, CWmax, a TXOP limit, and the like that correspond to each access category. The first duration may be obtained based on an MU EDCA timer field in the first parameter set. In other words, the MU EDCA timer field indicates the first duration. For example, the first duration is carried in the first parameter set, and the first station determines the first duration based on the first parameter set. For another example, a parameter in the first parameter set indicates the first duration, and the first station determines the first duration based on the parameter that is in the first parameter set and that indicates the first duration.

In this embodiment of this application, after sending the data frame triggered based on the trigger frame of the access point, the first station performs channel contention by using the parameters in the first parameter set. Compared with a common station, the first station can have a higher channel access priority.

FIG. 11 is a flowchart of another communication method according to an embodiment of this application. A method procedure in FIG. 11 is a possible implementation of the method in FIG. 8. As shown in FIG. 11, the method includes the following steps.

1101: A first station sends a request frame to an access point.

For step 1001, refer to step 801. The request frame carries a first parameter set.

1102: When the access point does not agree that the first station performs channel contention by using parameters in the first parameter set, the access point sends, to the access point, a response frame carrying a third parameter set.

The response frame carries the third parameter set. The third parameter set includes MU EDCA parameters that are to be used by the first station to perform channel contention. The third parameter set is different from the first parameter set.

1103: After sending a data frame triggered based on a trigger frame of the access point, the first station performs channel contention by using parameters in the third parameter set.

A possible implementation of step 1003 is as follows: After sending the data frame triggered based on the trigger frame of the access point, the first station performs channel contention within third duration by using the parameters in the third parameter set. The third duration is obtained based on a parameter in the third parameter set. For example, the third duration is carried in the third parameter set, and the first station determines the third duration based on the third parameter set. For another example, a parameter in the third parameter set indicates the third duration, and the first station determines the third duration based on the parameter that is in the third parameter set and that indicates the third duration.

The first parameter set is determined by the first station from a perspective of the first station. The access point and another station are not considered. The third parameter set is determined by the access point from an overall perspective. A plurality of stations are comprehensively considered. In this embodiment of this application, after sending the data frame triggered based on the trigger frame of the access point, the first station performs channel contention by using the parameters in the third parameter set. In this way, the first station can have a higher channel access priority, and impact on another station can be reduced.

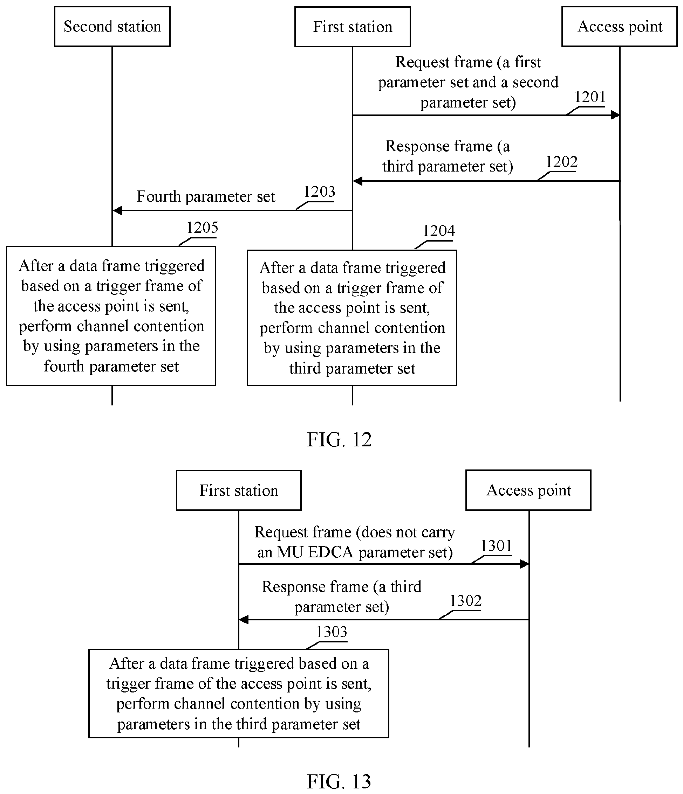

FIG. 12 is a flowchart of another communication method according to an embodiment of this application. A method procedure in FIG. 12 is a possible implementation of the method in FIG. 8. As shown in FIG. 12, the method includes the following steps:
1201: A first station sends a request frame to an access point.

The request frame carries a first parameter set and a second parameter set. The second parameter set includes MU EDCA parameters that a second station intends to use to perform channel contention. The second station and the first station belong to a same multi-link station device. The second parameter set may further include EDCA parameters that the second station intends to use to perform channel contention.

In a possible implementation, before sending the request frame to the access point, the first station may receive first parameter information from the second station. The first parameter information includes the second parameter set. The second parameter set includes the MU EDCA parameters that the second station intends to use to perform channel contention. In this implementation, the second station may actively send, to the first station, the first parameter information including the second parameter set.

In a possible implementation, before sending the request frame to the access point, the first station performs the following operations: sending a parameter set query message to the second station; and receiving second parameter information that is sent by the second station for the parameter set query message, where the second parameter information includes the second parameter set. The parameter set query message is used to obtain an MU EDCA parameter set that the second station intends to use to perform channel contention. In this implementation, the first station obtains, in an active query manner, the MU EDCA parameter set that the second station intends to use to perform channel contention.

1202: The access point sends a response frame for the request frame to the first station.

In a possible implementation, the response frame carries a third parameter set and a fourth parameter set. The third parameter set includes MU EDCA parameters that the access point allows the first station to use to perform channel contention. The fourth parameter set includes MU EDCA parameters that the access point allows the second station to use to perform channel contention. The third parameter set is different from the first parameter set. The fourth parameter set is different from the second parameter set. For a parameter set that each station intends to use and that is carried in the request frame, when the access point agrees that a station (any station) uses a parameter set that the station intends to use, the response frame may carry or not carry the parameter set that the station intends to use. When the access point does not agree that a station uses a parameter set that the station intends to use, the response frame carries a parameter set that the access point allows the station to use. For example, the access point agrees that the first station performs channel contention by using parameters in the first parameter set, and the response frame carries or does not carry the first parameter set. For another example, the access point does not agree that the first station performs channel contention by using parameters in the first parameter set, the response frame carries the third parameter set that the access point allows the first station to use, and the third parameter set is different from the first parameter set. For another example, the access point does not agree that the second station performs channel contention by using the parameters in the second parameter set, the response frame carries the fourth parameter set that the access point allows the second station to use, and the fourth parameter set is different from the second parameter set.

1203: The second station receives the fourth parameter set of the first station.

Step 1203 may be replaced by the following: The second station may obtain the fourth parameter set from the first station. The fourth parameter set is an MU EDCA parameter set that the access point allows the second station to use.

1204: After sending a data frame triggered based on a trigger frame of the access point, the first station performs channel contention by using the parameters in the third parameter set.

The third parameter set is the same as or different from the first parameter set. It should be understood that, if the access point agrees that the first station performs channel contention by using the parameters in the first parameter set, the response frame carries or does not carry the third parameter set, and the third parameter set is the same as the first parameter set. It should be understood that, if the access point does not agree that the first station performs channel contention by using the parameters in the first parameter set, the response frame carries the third parameter set, and the third parameter set is different from the first parameter set. An order of step 1203 and step 1204 is not limited. Step 1204 is optional but not mandatory.

A possible implementation of step 1204 is as follows: After sending the data frame triggered based on the trigger frame of the access point, the first station performs channel contention within third duration by using the parameters in the third parameter set. The third duration is obtained based on a parameter in the third parameter set.

1205: After sending a data frame triggered based on a trigger frame of the access point, the second station performs channel contention by using the parameters in the fourth parameter set.

The fourth parameter set is the same as or different from the second parameter set. It should be understood that, if the access point agrees that the second station performs channel contention by using the parameters in the second parameter set, the response frame carries or does not carry the fourth parameter set, and the fourth parameter set is the same as the second parameter set. It should be understood that, if the access point does not agree that the second station performs channel contention by using the parameters in the second parameter set, the response frame carries the fourth parameter set, and the fourth parameter set is different from the second parameter set.

A possible implementation of step 1204 is as follows: After sending the data frame triggered based on the trigger frame of the access point, the second station performs channel contention within fourth duration by using the parameters in the fourth parameter set. The fourth duration is obtained based on a parameter in the fourth parameter set.

In a possible implementation, the response frame carries the third parameter set but does not carry the fourth parameter set, the third parameter set includes MU EDCA parameters that the access point allows the first station to use to perform channel contention, the fourth parameter set includes MU EDCA parameters that the access point allows the second station to use to perform channel contention, and the third parameter set is different from the first parameter set. Step 1203 may be replaced by the following: The second station receives the second parameter set of the first station, or the second station determines that the access point allows the second station to perform channel contention by using the second parameter. Step 1205 may be replaced by the following: After sending the data frame triggered based on the trigger frame of the access point, the second station performs channel contention by using the parameters in the second parameter set. That the response frame carries the third parameter set but does not carry the fourth parameter set may be that the response frame carries the third parameter set and the second parameter set, or may be that the response frame carries the third parameter set but does not carry the second parameter set.

In a possible implementation, the response frame carries the fourth parameter set but does not carry the third parameter set, the fourth parameter set includes MU EDCA parameters that the access point allows the second station to use to perform channel contention, the third parameter set includes MU EDCA parameters that the access point allows the first station to use to perform channel contention, and the fourth parameter set is different from the second parameter set. Step 1204 may be replaced by the following: After sending the data frame triggered based on the trigger frame of the access point, the first station performs channel contention by using the parameters in the first parameter set. That the response frame carries the fourth parameter set but does not carry the third parameter set may be that the response frame carries the fourth parameter set and the first parameter set, or may be that the response frame carries the fourth parameter set but does not carry the first parameter set.

In a possible implementation, the response frame does not carry the fourth parameter set and the third parameter set, the fourth parameter set includes MU EDCA parameters that the access point allows the second station to use to perform channel contention, the third parameter set includes MU EDCA parameters that the access point allows the first station to use to perform channel contention, the fourth parameter set is different from the second parameter set, and the third parameter set is different from the first parameter set. Step 1203 may be replaced by the following: The second station receives the second parameter set of the first station, or the second station determines that the access point allows the second station to perform channel contention by using the second parameter. Step 1204 may be replaced by the following: After sending the data frame triggered based on the trigger frame of the access point, the first station performs channel contention by using the parameters in the first parameter set. Step 1205 may be replaced by the following: After sending the data frame triggered based on the trigger frame of the access point, the second station performs channel contention by using the parameters in the second parameter set. That the response frame does not carry the fourth parameter set and the third parameter set may be that the response frame carries the first parameter set and the second parameter set, or may be that the response frame does not carry any parameter set.

In this embodiment of this application, the request frame carries the first parameter set and the second parameter set. In comparison with the embodiment in FIG. 11, in the embodiment in FIG. 12, the request frame sent by the first station further carries the second parameter set, and the second station can obtain, without sending a request frame, the MU EDCA parameters that the access point allows the second station to use. Therefore, signaling exchange can be reduced.

FIG. 13 is a flowchart of another communication method according to an embodiment of this application. A difference between a method procedure in FIG. 13 and each of the method procedures in FIG. 8, FIG. 10, FIG. 11, and FIG. 12 is that a request frame sent by a first station does not include MU EDCA parameters that the first station intends to use. As shown in FIG. 13, the method includes the following steps:
1301: The first station sends the request frame to an access point. The request frame does not carry an MU EDCA parameter set.

Table 6 is an example of fields in the request frame that is sent by the first station to the access point. For meanings of fields in Table 6, refer to the meanings of the fields in Table 1.

**Table 6**

| Order (order) | Meaning (meaning) |
|---|---|
| 1 | Category |
| 2 | Protected EHT action |
| 3 | Dialog token |
| 4 | EDCA parameter set |

The order (order) in Table 6 is merely an example for description. This is not limited in this embodiment of the present invention.

1302: The access point sends a response frame for the request frame to the first station.

The response frame carries a third parameter set. The third parameter set includes MU EDCA parameters that are to be used by the first station to perform channel contention. With reference to FIG. 9B, the MU EDCA parameter set represents the third parameter set.

Step 1301 is optional but not mandatory. In a possible implementation, the access point directly sends, to the first station, a radio frame carrying the third parameter set. In other words, step 1301 and step 1302 may be replaced by the following: The access point sends, to the first station, the radio frame carrying the third parameter set, and the radio frame may be an EPCS priority access enable request frame. The radio frame may further carry a fourth parameter set. The fourth parameter set includes MU EDCA parameters that are to be used by a second station to perform channel contention. The second station and the first station belong to a same multi-link station device.

1303: After sending a data frame triggered based on a trigger frame of the access point, the first station performs channel contention by using the parameters in the third parameter set.

For step 1303, refer to step 1203.

In a possible implementation, the response frame further carries the fourth parameter set. The fourth parameter set includes the MU EDCA parameters that are to be used by the second station to perform channel contention. The second station and the first station belong to the same multi-link station device. With reference to FIG. 9C, the second station corresponds to the per-STA profile 2, and the MU EDCA parameter set in the per-STA profile 2 represents the fourth parameter set. In this implementation, after sending a data frame triggered based on a trigger frame of the access point, the second station performs channel contention by using the parameters in the fourth parameter set.

In this embodiment of this application, the request frame does not carry the MU EDCA parameter set, and the response frame carries the MU EDCA parameters that the access point allows the first station to use. In this way, a volume of data carried in the request frame can be reduced.

In the method procedures in FIG. 8, FIG. 10, FIG. 11, FIG. 12, and FIG. 13, the first station sends the request frame to obtain the MU EDCA parameter set that is to be used for channel contention. With reference to the accompanying drawings, the following describes a solution in which the first station determines a to-be-used MU EDCA parameter set based on an EDCA parameter set carried in a beacon (beacon) frame.

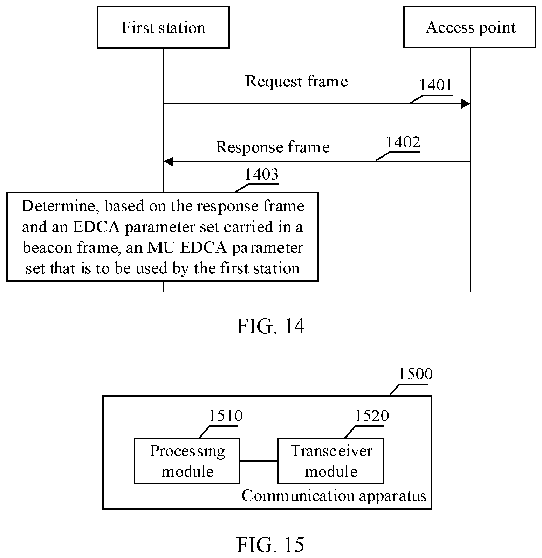

FIG. 14 is a flowchart of another communication method according to an embodiment of this application. As shown in FIG. 14, the method includes the following steps:
1401: A first station sends a request frame to an access point.
   The request frame is used to request to obtain a channel priority access right. For step 1401, refer to step 1301. Table 6 is an example of fields in the request frame that is sent by the first station to the access point.
1402: The access point sends a response frame for the request frame to the first station.

Table 5 is an example of fields in the response frame that is sent by the access point to the first station.

In a possible implementation, the request frame is an EPCS priority access enable request frame, and the response frame is an EPCS priority access enable response frame.

1403: The first station determines, based on the response frame and an EDCA parameter set carried in a beacon frame, an MU EDCA parameter set that is to be used by the first station.

In a possible implementation, the MU EDCA parameter set that is to be used by the first station is used to perform channel contention after a data frame triggered based on a trigger frame of the access point is successfully sent. In this implementation, after successfully sending the data frame triggered based on the trigger frame of the access point, the first station performs channel contention by using the determined MU EDCA parameter set, so that the first station can have a higher channel access priority. In a possible implementation, the MU EDCA parameter set that is to be used by the first station is used to perform channel contention within second duration after the data frame triggered based on the trigger frame of the access point is successfully sent. The second duration is obtained based on a parameter in the MU EDCA parameter set.

In a possible implementation, determining the MU EDCA parameter set that is to be used by the first station further includes: determining, based on an MU EDCA parameter set in the beacon frame, the MU EDCA parameter set that is to be used by the first station. In other words, the first station determines, based on the EDCA parameter set and the MU EDCA parameter set in the beacon frame, the MU EDCA parameter set that is to be used by the first station. Determining, based on an MU EDCA parameter set in the beacon frame, the MU EDCA parameter set that is to be used by the first station may be as follows: The first station determines, based on the EDCA parameter set and an MU EDCA timer (timer) in the MU EDCA parameter set in the beacon frame, the MU EDCA parameter set that is to be used by the first station. For example, the first station uses the EDCA parameter set in the beacon frame as the MU EDCA parameter set that is to be used by the first station, and the first station determines, based on the MU EDCA timer (timer) in the MU EDCA parameter set, duration in which channel contention is performed by using the EDCA parameter set as the MU EDCA parameter set. That the first station uses the EDCA parameter set in the beacon frame as the MU EDCA parameter set that is to be used by the first station may include: setting values of an ACI/AIFSN field and an ECWmin/ECWmax field that correspond to each AC in the EDCA parameter set, to an ACI/AIFSN field and an ECWmin/ECWmax field that correspond to each AC in the MU EDCA parameter set. Determining, based on the MU EDCA timer (timer) in the MU EDCA parameter set, the duration in which channel contention is performed by using the EDCA parameter set as the MU EDCA parameter set may be setting a value of an MU EDCA timer field corresponding to each AC in the MU EDCA parameter set in the beacon frame to an MU EDCA timer field corresponding to each AC in the MU EDCA parameter set that is to be used by the first station. For example, after receiving the trigger frame (trigger frame) and successfully sending the data frame, the first station performs EDCA channel contention within a period of time by using parameters in the EDCA parameter set in the beacon frame. A length of the period of time is carried in the MU EDCA parameter set in the beacon frame. For another example, after receiving a trigger frame and successfully sending a data frame, the second station performs EDCA channel contention within a period of time by using parameters in an EDCA parameter set of a link of the second station. A length of the period of time is carried in the MU EDCA parameter set of the link of the second station.

Compared with the embodiments described in the method procedures in FIG. 8, FIG. 10, FIG. 11, FIG. 12, and FIG. 13, in the embodiment described in the method procedure in FIG. 14, neither the request frame nor the response frame needs to carry the MU EDCA parameter set, so that a volume of sent data can be reduced. In addition, the MU EDCA parameter set that is to be used by the first station is determined based on the EDCA parameter set carried in the beacon frame, to obtain parameters with a higher channel access priority.

The following describes a communication apparatus provided in embodiments of this application.

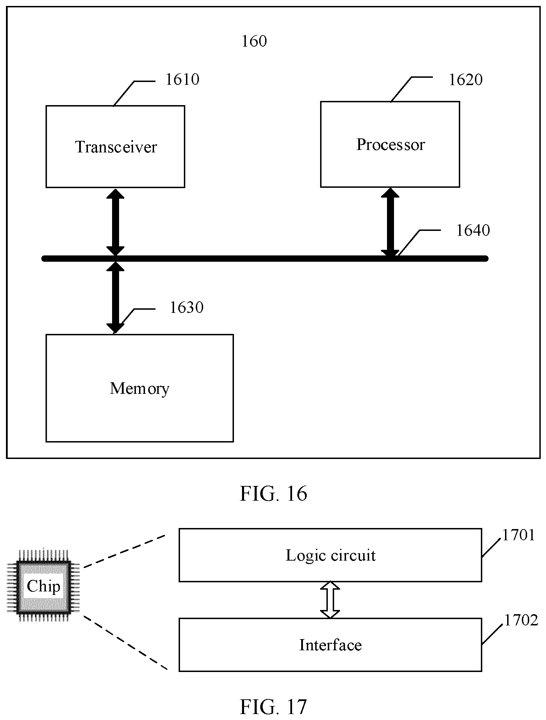

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that division into modules is an example and is merely a logical function division in this application. In actual implementation, there may be another division manner. The following describes the communication apparatus in embodiments of this application in detail with reference to FIG. 15 and FIG. 17.

FIG. 15 is a schematic diagram of a structure of a communication apparatus 1500 according to an embodiment of this application. The communication apparatus 1500 may correspondingly implement functions or steps implemented by the communication apparatus (for example, the first station and the access point) in the foregoing method embodiments. The communication apparatus may include a processing module 1510 and a transceiver module 1520. Optionally, the communication apparatus may further include a storage unit. The storage unit may be configured to store instructions (code or a program) and/or data. The processing module 1510 and the transceiver module 1520 may be coupled to the storage unit. For example, the processing module 1510 may read the instructions (the code or the program) and/or the data in the storage unit, to implement a corresponding method. The foregoing units may be disposed independently, or may be partially or completely integrated. For example, the transceiver module 1520 may include a sending module and a receiving module. The sending module may be a transmitter, and the receiving module may be a receiver. An entity corresponding to the transceiver module 1520 may be a transceiver.

In some possible implementations, the communication apparatus 1500 can correspondingly implement actions and functions of the first station in the method embodiments. For example, the communication apparatus 1500 may be the first station, or may be a component (for example, a chip or a circuit) used in the first station. For example, the transceiver module 1520 may be configured to perform all receiving or sending operations performed by the first station in the embodiments shown in FIG. 8, FIG. 10, FIG. 11, FIG. 12, FIG. 13, and FIG. 14, for example, step 801 and step 802 in the embodiment shown in FIG. 8, step 1001 and step 1002 in the embodiment shown in FIG. 10, step 1101 and step 1102 in the embodiment shown in FIG. 11, step 1201, step 1202, and step 1203 in the embodiment shown in FIG. 12, step 1301 and step 1302 in the embodiment shown in FIG. 13, step 1401 and step 1402 in the embodiment shown in FIG. 14, and/or another process used to support the technology described in this specification. The processing module 1510 is configured to perform all operations, other than the sending and receiving operations, performed by the first station in the embodiments shown in FIG. 10, FIG. 11, FIG. 12, FIG. 13, and FIG. 14, for example, step 1003 in the embodiment shown in FIG. 10, step 1103 in the embodiment shown in FIG. 11, step 1204 in the embodiment shown in FIG. 12, step 1303 in the embodiment shown in FIG. 13, and step 1403 in the embodiment shown in FIG. 14.

In some possible implementations, the communication apparatus 1500 can correspondingly implement actions and functions of the access point in the method embodiments. For example, the communication apparatus 1500 may be the access point, or may be a component (for example, a chip or a circuit) used in the access point. For example, the transceiver module 1520 may be configured to perform all receiving or sending operations performed by the access point in the embodiments shown in FIG. 8, FIG. 10, FIG. 11, FIG. 12, FIG. 13, and FIG. 14, for example, step 801 and step 802 in the embodiment shown in FIG. 8, step 1001 and step 1002 in the embodiment shown in FIG. 10, step 1101 and step 1102 in the embodiment shown in FIG. 11, step 1201 and step 1202 in the embodiment shown in FIG. 12, step 1301 and step 1302 in the embodiment shown in FIG. 13, step 1401 and step 1402 in the embodiment shown in FIG. 14, and/or another process used to support the technology described in this specification. The processing module 1510 is configured to perform all operations, other than the sending and receiving operations, performed by the access point in the embodiment shown in FIG. 11, for example, step 1102 in the embodiment shown in FIG. 11.

The foregoing describes the first station and the access point in embodiments of this application. The following describes possible product forms of the first station and the access point. It should be understood that any form of product that has the functions of the first station in FIG. 15 and any form of product that has the functions of the access point in FIG. 15 fall within the protection scope of embodiments of this application. It should be further understood that the following description is merely an example, and product forms of the access point and the first station in embodiments of this application are not limited thereto.

In a possible implementation, in the communication apparatus shown in FIG. 15, the processing module 1510 may be one or more processors, and the transceiver module 1520 may be a transceiver, or the transceiver module 1520 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A connection manner between the processor and the transceiver is not limited in this embodiment of this application.

FIG. 16 is a schematic diagram of a structure of another communication apparatus 160 according to an embodiment of this application. The communication apparatus in FIG. 16 may be the foregoing first station, or may be the foregoing access point.

As shown in FIG. 16, the communication apparatus 160 includes one or more processors 1620 and a transceiver 1610. The transceiver 1610 may implement the functions of the transceiver module 1520. The processor 1620 may implement the functions of the processing module 1510.

In each implementation of the communication apparatus shown in FIG. 16, the transceiver may include a receiver and a transmitter. The receiver is configured to perform a receiving function (or an operation). The transmitter is configured to perform a transmitting function (or an operation). The transceiver is configured to communicate with another device/apparatus through a transmission medium.

Optionally, the communication apparatus 160 may further include one or more memories 1630, configured to store program instructions and/or data. The memory 1630 is coupled to the processor 1620. The coupling in this embodiment of this application may be an indirect coupling or a communication connection between apparatuses, units, or modules in an electrical form, a mechanical form, or another form, and is used for information exchange between the apparatuses, the units, or the modules. The processor 1620 may collaboratively operate with the memory 1630. The processor 1620 may execute the program instructions stored in the memory 1630.

A specific connection medium between the transceiver 1610, the processor 1620, and the memory 1630 is not limited in this embodiment of this application. In this embodiment of this application, the memory 1630, the processor 1620, and the transceiver 1610 are connected to each other through a bus 1640 in FIG. 16. The bus is represented by using a bold line in FIG. 16. A connection manner between other components is merely an example for description, and imposes no limitation. The bus may be categorized as an address bus, a data bus, a control bus, or the like. For ease of representation, only one bold line is used in FIG. 16 to represent the bus. However, it does not indicate that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like; and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this is not limited thereto. The memory in this embodiment of this application may be alternatively a circuit or any other apparatus that can implement a storage function, and is configured to store program instructions and/or data.

The processor 1620 is mainly configured to: process a communication protocol and communication data, control the entire communication apparatus, execute a software program, and process data of the software program. The memory 1630 is mainly configured to store the software program and data. The transceiver 1610 may include a control circuit and an antenna. The control circuit is mainly configured to: perform conversion between a baseband signal and a radio frequency signal, and process a radio frequency signal. The antenna is mainly configured to receive and send a radio frequency signal in a form of an electromagnetic wave. An input/output apparatus, such as a touchscreen, a display, or a keyboard, is mainly configured to: receive data input by a user, and output data to the user.

After the communication apparatus is powered on, the processor 1620 may read the software program in the memory 1630, interpret and execute instructions of the software program, and process data of the software program. When data needs to be sent wirelessly, the processor 1620 performs baseband processing on the to-be-sent data, and then outputs a baseband signal to a radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1620. The processor 1620 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

It may be understood that the communication apparatus shown in this embodiment of this application may further have more components and the like than those in FIG. 16. This is not limited in this embodiment of this application. The methods performed by the processor and the transceiver are merely examples. For specific steps performed by the processor and the transceiver, refer to the methods described above.

In another possible implementation, in the communication apparatus shown in FIG. 15, the processing module 1510 may be one or more logic circuits, and the transceiver module 1520 may be an input/output interface that is also referred to as a communication interface, an interface circuit, an interface, or the like. Alternatively, the transceiver module 1520 may be a sending unit and a receiving unit. The sending unit may be an output interface, and the receiving unit may be an input interface. Alternatively, the sending unit and the receiving unit are integrated into one unit, for example, an input/output interface. As shown in FIG. 17, a communication apparatus shown in FIG. 17 includes a logic circuit 1701 and an interface 1702. In other words, the processing module 1510 may be implemented by using the logic circuit 1701, and the transceiver module 1520 may be implemented by using the interface 1702. The logic circuit 1701 may be a chip, a processing circuit, an integrated circuit, a system-on-chip (system on chip, SoC) chip, or the like, and the interface 1702 may be a communication interface, an input/output interface, a pin, or the like. For example, an example in which the foregoing communication apparatus is a chip is used in FIG. 17. The chip includes the logic circuit 1701 and the interface 1702.

In this embodiment of this application, the logic circuit and the interface may be further be coupled to each other. A specific connection manner of the logic circuit and the interface is not limited in this embodiment of this application.

For example, when the communication apparatus is configured to perform the foregoing method, function, or step performed by the first station, the logic circuit 1701 is configured to generate a request frame, and the interface 1702 is configured to output the request frame.

For example, when the communication apparatus is configured to perform the method, function, or step performed by the access point, the interface 1702 is configured to input a request frame, the logic circuit 1701 is configured to generate a response frame based on the request frame, and the interface 1702 is configured to output the response frame.

It may be understood that the communication apparatus shown in this embodiment of this application may implement the method provided in embodiments of this application in a form of hardware or in a form of software. This is not limited in this embodiment of this application.

An embodiment of this application further provides a wireless communication system. The wireless communication system includes a first station and an access point. The first station and the access point may be configured to perform the method in any one of the foregoing embodiments (shown in FIG. 8 and FIG. 10 to FIG. 14).

This application further provides a computer-readable storage medium. The computer-readable storage medium stores computer code. When the computer code is run on a computer, the computer is enabled to perform operations and/or processing performed by the first station in the method provided in this application.

This application further provides a computer-readable storage medium. The computer-readable storage medium stores computer code. When the computer code is run on a computer, the computer is enabled to perform operations and/or processing performed by the access point in the method provided in this application.

This application further provides a computer program product. The computer program product includes computer code or a computer program. When the computer code or the computer program is run on a computer, operations and/or processing performed by the first station in the method provided in this application are/is performed.

This application further provides a computer program product. The computer program product includes computer code or a computer program. When the computer code or the computer program is run on a computer, operations and/or processing performed by the access point in the method provided in this application are/is performed.

In the several embodiments provided in this application, it should be understood that the disclosed system, apparatus, and method may be implemented in other manners. For example, the described apparatus embodiments are merely examples. For example, division into the units is merely logical function division. In actual implementation, another division manner may be used. For example, a plurality of units or components may be combined or integrated into another system, or some features may be ignored or may not be performed. In addition, the shown or discussed mutual couplings, direct couplings, or communication connections may be indirect couplings or communication connections through some interfaces, apparatuses, or units, or may be electrical connections, mechanical connections, or connections in other forms.

The units described as separate parts may or may not be physically separate, and parts displayed as units may or may not be physical units, and may be at one location, or may be distributed on a plurality of network elements. Some or all of the units may be selected according to actual requirements to achieve the technical effects of the solutions provided in embodiments in this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or parts contributing to the conventional technologies, or all or some of the technical solutions may be embodied in a form of a software product. The computer software product is stored in a readable storage medium, and includes several instructions for instructing a computer device (which may be a personal computer, a server, a network device, or the like) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing description is merely specific implementations of this application, but is not intended to limit the protection scope of this application. Therefore, the protection scope of this application shall be subject to the protection scope of the claims.

## Claims

1. A communication method, comprising:
receiving (801) a request frame from a first station, wherein the first station is affiliated with an EPCS non-AP MLD; and
sending (802) a response frame for the request frame to the first station, **characterised in that** the response frame carries a third parameter set, and the third parameter set comprises multi-user MU enhanced distributed channel access EDCA parameters that are to be used by the first station to perform channel contention.

2. The method according to claim 1, wherein the response frame further carries a fourth parameter set, the fourth parameter set comprises MU EDCA parameters that are to be used by a second station to perform channel contention, and the second station and the first station belong to a same multi-link station device.

3. The method according to claim 1 or 2, wherein the third parameter set is comprised in a priority access multi-link element MLE field.

4. The method according to claim 1 or 2, wherein the third parameter set is comprised in a link information field in a priority access MLE field.

5. A communication method, comprising:
sending (801) a request frame to an access point; and
receiving (802) a response frame that is sent by the access point for the request frame, **characterised in that** the response frame carries a third parameter set, and the third parameter set comprises multi-user MU enhanced distributed channel access EDCA parameters that are to be used by a first station to perform channel contention, wherein the first station is affiliated with an EPCS non-AP MLD.

6. The method according to claim 5, wherein the response frame further carries a fourth parameter set, the fourth parameter set comprises MU EDCA parameters that are to be used by the second station to perform channel contention, and the second station and the first station belong to a same multi-link station device.

7. The method according to claim 5 or 6, wherein the method further comprises:
after a data frame triggered based on a trigger frame of the access point is sent, performing channel contention by using the parameters in the third parameter set.

8. The method according to any one of claims 5 to 7, wherein the third parameter set is comprised in a priority access multi-link element MLE field.

9. The method according to any one of claims 5 to 7, wherein the third parameter set is comprised in a link information field in a priority access MLE field.

10. A communication apparatus (1500), comprising:
a transceiver module (1520), configured to receive a request frame from a first station, wherein the first station is affiliated with an EPCS non-AP MLD; and
a processing module (1510), configured to generate a response frame for the request frame, wherein
the transceiver module is further configured to send the response frame for the request frame to the first station, **characterised in that** the response frame carries a third parameter set, and the third parameter set comprises multi-user MU enhanced distributed channel access EDCA parameters that are to be used by the first station to perform channel contention.

11. The apparatus according to claim 10, wherein the response frame further carries a fourth parameter set, the fourth parameter set comprises MU EDCA parameters that are to be used by a second station to perform channel contention, and the second station and the first station belong to a same multi-link station device.

12. The apparatus according to claim 10 or 11, wherein the third parameter set is comprised in a priority access multi-link element MLE field.

13. The apparatus according to claim 10 or 11, wherein the third parameter set is comprised in a link information field in a priority access MLE field.

14. A communication apparatus (1500), comprising:
a processing module (1510), configured to generate a request frame; and
a transceiver module (1520), configured to: send the request frame to an access point, and receive a response frame that is sent by the access point for the request frame, **characterised in that** the response frame carries a third parameter set, and the third parameter set comprises multi-user MU enhanced distributed channel access EDCA parameters that are to be used by the communication apparatus to perform channel contention, wherein the communication apparatus is affiliated with an EPCS non-AP MLD.

15. The apparatus according to claim 14, wherein the response frame further carries a fourth parameter set, the fourth parameter set comprises MU EDCA parameters that are to be used by a second station to perform channel contention, and the second station and the first station belong to a same multi-link station device.

## Patentansprüche

1. Kommunikationsverfahren, umfassend:
Empfangen (801) eines Anforderungsrahmens aus einer ersten Station, wobei die erste Station an eine EPCS-Nicht-AP-MLD angeschlossen ist; und
Senden (802) eines Antwortrahmens für den Anforderungsrahmen an die erste Station, **dadurch gekennzeichnet, dass** der Antwortrahmen einen dritten Parametersatz enthält und der dritte Parametersatz erweiterte verteilte Kanalzugriffsparameter, EDCA-Parameter, für mehrere Benutzer MU umfasst, die durch die erste Station zu verwenden sind, um Kanalkonkurrenz durchzuführen.

2. Verfahren nach Anspruch 1, wobei der Antwortrahmen ferner einen vierten Parametersatz enthält, der vierte Parametersatz MU-EDCA-Parameter umfasst, die durch eine zweite Station zu verwenden sind, um Kanalkonkurrenz durchzuführen, und die zweite Station und die erste Station zu derselben Multilink-Stationseinrichtung gehören.

3. Verfahren nach Anspruch 1 oder 2, wobei der dritte Parametersatz in einem Multilink-Elementfeld, MLE-Feld, mit Prioritätszugriff enthalten ist.

4. Verfahren nach Anspruch 1 oder 2, wobei der dritte Parametersatz in einem Verbindungsinformationsfeld in einem MLE-Feld mit Prioritätszugriff enthalten ist.

5. Kommunikationsverfahren, umfassend:
Senden (801) eines Anforderungsrahmens an einen Zugriffspunkt; und
Empfangen (802) eines Antwortrahmens, der durch den Zugriffspunkt für den Anforderungsrahmen gesendet wird, **dadurch gekennzeichnet, dass** der Antwortrahmen einen dritten Parametersatz enthält und der dritte Parametersatz erweiterte verteilte Kanalzugriffsparameter, EDCA-Parameter, für mehrere Benutzer MU umfasst, die durch eine erste Station zu verwenden sind, um Kanalkonkurrenz durchzuführen, wobei die erste Station an eine EPCS-Nicht-AP-MLD angeschlossen ist.

6. Verfahren nach Anspruch 5, wobei der Antwortrahmen ferner einen vierten Parametersatz enthält, der vierte Parametersatz MU-EDCA-Parameter umfasst, die durch die zweite Station zu verwenden sind, um Kanalkonkurrenz durchzuführen, und die zweite Station und die erste Station zu derselben Multilink-Stationseinrichtung gehören.

7. Verfahren nach Anspruch 5 oder 6, wobei das Verfahren ferner Folgendes umfasst:
nachdem ein Datenrahmen, der basierend auf einem Auslöserahmen des Zugriffspunkts ausgelöst wird, gesendet wurde, Durchführen von Kanalkonkurrenz unter Verwendung der Parameter in dem dritten Parametersatz.

8. Verfahren nach einem der Ansprüche 5 bis 7, wobei der dritte Parametersatz in einem Multilink-Elementfeld, MLE-Feld, mit Prioritätszugriff enthalten ist.

9. Verfahren nach einem der Ansprüche 5 bis 7, wobei der dritte Parametersatz in einem Verbindungsinformationsfeld in einem MLE-Feld mit Prioritätszugriff enthalten ist.

10. Kommunikationsvorrichtung (1500), umfassend:
ein Sende-Empfangsmodul (1520), das dazu konfiguriert ist, einen Anforderungsrahmen aus einer ersten Station zu empfangen, wobei die erste Station an eine EPCS-Nicht-AP-MLD angeschlossen ist; und
ein Verarbeitungsmodul (1510), das dazu konfiguriert ist, einen Antwortrahmen für den Anforderungsrahmen zu generieren, wobei
das Sende-Empfangsmodul ferner dazu konfiguriert ist, den Antwortrahmen für den Anforderungsrahmen an die erste Station zu senden, **dadurch gekennzeichnet, dass** der Antwortrahmen einen dritten Parametersatz enthält und der dritte Parametersatz erweiterte verteilte Kanalzugriffsparameter, EDCA-Parameter, für mehrere Benutzer MU umfasst, die durch die erste Station zu verwenden sind, um Kanalkonkurrenz durchzuführen.

11. Vorrichtung nach Anspruch 10, wobei der Antwortrahmen ferner einen vierten Parametersatz enthält, der vierte Parametersatz MU-EDCA-Parameter umfasst, die durch eine zweite Station zu verwenden sind, um Kanalkonkurrenz durchzuführen, und die zweite Station und die erste Station zu derselben Multilink-Stationseinrichtung gehören.

12. Vorrichtung nach Anspruch 10 oder 11, wobei der dritte Parametersatz in einem Multilink-Elementfeld, MLE-Feld, mit Prioritätszugriff enthalten ist.

13. Vorrichtung nach Anspruch 10 oder 11, wobei der dritte Parametersatz in einem Verbindungsinformationsfeld in einem MLE-Feld mit Prioritätszugriff enthalten ist.

14. Kommunikationsvorrichtung (1500), umfassend:
ein Verarbeitungsmodul (1510), das dazu konfiguriert ist, einen Anforderungsrahmen zu generieren; und
ein Sende-Empfangsmodul (1520), das dazu konfiguriert ist: den Anforderungsrahmen an einen Zugriffspunkt zu senden und einen Antwortrahmen, der durch den Zugriffspunkt für den Anforderungsrahmen gesendet wird, zu empfangen, **dadurch gekennzeichnet, dass** der Antwortrahmen einen dritten Parametersatz enthält und der dritte Parametersatz erweiterte verteilte Kanalzugriffsparameter, EDCA-Parameter, für mehrere Benutzer MU umfasst, die durch die Kommunikationsvorrichtung zu verwenden sind, um Kanalkonkurrenz durchzuführen, wobei die Kommunikationsvorrichtung an eine EPCS-Nicht-AP-MLD angeschlossen ist.

15. Vorrichtung nach Anspruch 14, wobei der Antwortrahmen ferner einen vierten Parametersatz enthält, der vierte Parametersatz MU-EDCA-Parameter umfasst, die durch eine zweite Station zu verwenden sind, um Kanalkonkurrenz durchzuführen, und die zweite Station und die erste Station zu derselben Multilink-Stationseinrichtung gehören.

## Revendications

1. Procédé de communication, comprenant :
la réception (801) d'une trame de requête provenant d'une première station, dans lequel la première station est affiliée à un MLD non-AP EPCS ; et
l'envoi (802) d'une trame de réponse pour la trame de requête à la première station, **caractérisé en ce que** la trame de réponse transporte un troisième ensemble de paramètres, et le troisième ensemble de paramètres comprend des paramètres d'accès au canal distribué amélioré, EDCA, multi-utilisateur, MU, qui doivent être utilisés par la première station pour réaliser une contention de canal.

2. Procédé selon la revendication 1, dans lequel la trame de réponse transporte également un quatrième ensemble de paramètres, le quatrième ensemble de paramètres comprend des paramètres MU EDCA qui doivent être utilisés par une seconde station pour réaliser une contention de canal, et la seconde station et la première station appartiennent à un même dispositif de station multi-liaison.

3. Procédé selon la revendication 1 ou 2, dans lequel le troisième ensemble de paramètres est compris dans un champ d'élément multi-liaison, MLE, d'accès prioritaire.

4. Procédé selon la revendication 1 ou 2, dans lequel le troisième ensemble de paramètres est compris dans un champ d'informations de liaison dans un champ MLE d'accès prioritaire.

5. Procédé de communication, comprenant :
l'envoi (801) d'une trame de requête à un point d'accès ; et
la réception (802) d'une trame de réponse qui est envoyée par le point d'accès pour la trame de requête, **caractérisé en ce que** la trame de réponse transporte un troisième ensemble de paramètres, et le troisième ensemble de paramètres comprend des paramètres d'accès au canal distribué amélioré, EDCA, multi-utilisateur, MU, qui doivent être utilisés par une première station pour réaliser une contention de canal, dans lequel la première station est affiliée à un MLD non-AP EPCS.

6. Procédé selon la revendication 5, dans lequel la trame de réponse transporte également un quatrième ensemble de paramètres, le quatrième ensemble de paramètres comprend des paramètres MU EDCA qui doivent être utilisés par la seconde station pour réaliser une contention de canal, et la seconde station et la première station appartiennent à un même dispositif de station multi-liaison.

7. Procédé selon la revendication 5 ou 6, dans lequel le procédé comprend également :
après l'envoi d'une trame de données déclenchée sur la base d'une trame de déclenchement du point d'accès, la réalisation d'une contention de canal à l'aide des paramètres dans le troisième ensemble de paramètres.

8. Procédé selon l'une quelconque des revendications 5 à 7, dans lequel le troisième ensemble de paramètres est compris dans un champ d'élément multi-liaison, MLE, d'accès prioritaire.

9. Procédé selon l'une quelconque des revendications 5 à 7, dans lequel le troisième ensemble de paramètres est compris dans un champ d'informations de liaison dans un champ MLE d'accès prioritaire.

10. Appareil de communication (1500), comprenant :
un module émetteur-récepteur (1520), configuré pour recevoir une trame de requête à partir d'une première station, dans lequel la première station est affiliée à un MLD non-AP EPCS ; et
un module de traitement (1510), configuré pour générer une trame de réponse pour la trame de requête, dans lequel
le module émetteur-récepteur est également configuré pour envoyer la trame de réponse pour la trame de requête à la première station, **caractérisé en ce que** la trame de réponse transporte un troisième ensemble de paramètres, et le troisième ensemble de paramètres comprend des paramètres d'accès au canal distribué amélioré, EDCA, multi-utilisateur, MU, qui doivent être utilisés par la première station pour réaliser une contention de canal.

11. Appareil selon la revendication 10, dans lequel la trame de réponse transporte également un quatrième ensemble de paramètres, le quatrième ensemble de paramètres comprend des paramètres MU EDCA qui doivent être utilisés par une seconde station pour réaliser une contention de canal, et la seconde station et la première station appartiennent à un même dispositif de station multi-liaison.

12. Appareil selon la revendication 10 ou 11, dans lequel le troisième ensemble de paramètres est compris dans un champ d'élément multi-liaison, MLE, d'accès prioritaire.

13. Appareil selon la revendication 10 ou 11, dans lequel le troisième ensemble de paramètres est compris dans un champ d'informations de liaison dans un champ MLE d'accès prioritaire.

14. Appareil de communication (1500), comprenant :
un module de traitement (1510), configuré pour générer une trame de requête ; et
un module émetteur-récepteur (1520), configuré pour : envoyer la trame de requête à un point d'accès, et recevoir une trame de réponse qui est envoyée par le point d'accès pour la trame de requête, **caractérisé en ce que** la trame de réponse transporte un troisième ensemble de paramètres, et le troisième ensemble de paramètres comprend des paramètres d'accès au canal distribué amélioré, EDCA, multi-utilisateur, MU, qui doivent être utilisés par l'appareil de communication pour réaliser une contention de canal, dans lequel l'appareil de communication est affilié à un MLD non-AP EPCS.

15. Appareil selon la revendication 14, dans lequel la trame de réponse transporte également un quatrième ensemble de paramètres, le quatrième ensemble de paramètres comprend des paramètres MU EDCA qui doivent être utilisés par une seconde station pour réaliser une contention de canal, et la seconde station et la première station appartiennent à un même dispositif de station multi-liaison.
